# EUROPEAN PATENT SPECIFICATION

(11) **EP 2 671 900 B1**
(45) Date of publication and mention of the grant of the patent: **10.08.2016**
(21) Application number: 11857579.4
(22) Date of filing: 22.08.2011
(51) Int. Cl.: C08G 18/65

(54) **POLYOL COMPOSITION FOR PRODUCTION OF POLYURETHANE RESINS, AND POLYURETHANE RESIN PRODUCING PROCESS USING SAME**
POLYOLZUSAMMENSETZUNG ZUR HERSTELLUNG VON POLYURETHANHARZEN UND VERFAHREN ZUR HERSTELLUNG VON POLYURETHANHARZEN DAMIT
COMPOSITION DE POLYOL POUR LA FABRICATION DE RÉSINES DE POLYURÉTHANE ET PROCÉDÉ DE FABRICATION D'UNE RÉSINE DE POLYURÉTHANE À L'AIDE DE CETTE COMPOSITION

(30) Priority: 31.01.2011 JP 2011018700; 01.02.2011 JP 2011019994
(43) Date of publication of application: 11.12.2013
(73) Proprietor: Sanyo Chemical Industries, Ltd., Kyoto-shi, Kyoto 605-0995 (JP)
(72) Inventor: UCHIDA, Katsuya, Kyoto-shi Kyoto 605-0995 (JP); KABU, Koji, Kyoto-shi Kyoto 605-0995 (JP); SASAKI, Kei, Kyoto-shi Kyoto 605-0995 (JP); HIRANO, Tomohisa, Kyoto-shi Kyoto 605-0995 (JP)
(74) Representative: Kotitschke & Heurung Partnerschaft mbB
(86) International application number: PCT/JP2011/004654
(87) International publication number: WO 2012/104935

(56) References cited:
- JP-A- 2009 263 647
- JP-A- 2010 031 242

## Description

### TECHNICAL FIELD

The present invention relates to a polyol composition for the production of a polyurethane resin, and a polyurethane resin producing process using the same.

### BACKGROUND ART

In spite of the conventional use of chlorofluorocarbons as a foaming agent used for the production of rigid polyurethane foams, conventional chlorofluorocarbons are subject to regulation as specified in "Kyoto Protocol" etc., and in order to meet such regulations, hydrofluorocarbons, low boiling hydrocarbons, etc. are being used as a foaming agent. However, a trend to voluntary regulation on hydrofluorocarbons has been shown and it is increasingly the case that low-boiling hydrocarbons are used as foaming agents.

Moreover, flame retardation of polyurethane resin moldings has been achieved through the incorporation of a flame retardant. (See, for example, Non-Patent Document 1.)

On the other hand, the density of polyurethane foam has recently been reduced by increasing the amount of a foaming agent for the purpose of cost reduction, etc. The reduction in density has a problem that the mechanical strength such as hardness and the combustion resistance (flame retardancy) of polyurethane foam will deteriorate.

Patent Document 1 is known as a polyurethane foam superior in mechanical strength. However, in reducing the density using a low boiling point hydrocarbon, some production formulations, such as the case where the viscosity of a reaction mixture is reduced by setting the hydroxyl value of a feed polyol to be low for improving workability, may make resulting polyurethane foams have remarkably reduced hardness or remarkably reduced combustion resistance (especially, in the case of free-rise foams).

### PRIOR ART DOCUMENTS

### PATENT DOCUMENT

Patent Document 1: JP-A-2004-209719

### NON-PATENT DOCUMENT

Non-Patent Document 1: "Polyurethane Resin Handbook", edited by Keiji Iwata, The Nikkan Kogyo Shimbun, Ltd., published September 25, 1987, pages 167, 174-177

### SUMMARY OF THE INVENTION

### PROBLEMS TO BE SOLVED BY THE INVENTION

The object of the present invention is to provide a polyol composition for the production of polyurethane resins from which a foam being superior in mechanical properties, such as hardness, and combustion resistance (flame retardancy) even if the molded density of polyurethane foam is reduced.

### SOLUTIONS TO THE PROBLEMS

That is, the gist of the polyol composition (A) for the production of polyurethane resins of the present invention is to comprise a compound (a1) having a vinyl polymerizable functional group represented by the following formula (I) and a strength improver (a2) represented by the following formula (II), 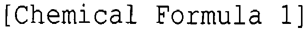 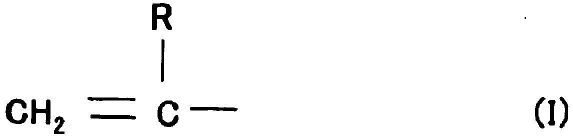 wherein in formula (I), R represents hydrogen, an alkyl group having 1 to 15 carbon atoms, or an aryl group having 6 to 21 carbon atoms, 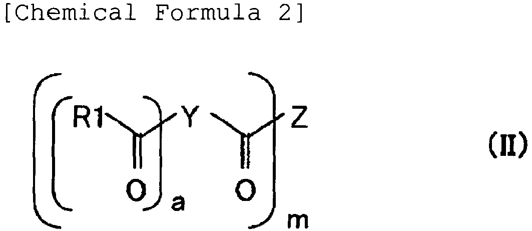 wherein in formula (II), R1 represents a residue resulting from the removal of one active hydrogen atom from an active hydrogen-containing compound, and the plurality of R1s each may be the same or different; Y represents a residue resulting from the removal of a carboxyl group from a di-or more-valent aromatic polycarboxylic acid (f), wherein the aromatic ring of Y is composed of carbon atoms, and at least one of the substituents of the aromatic ring is a hydrogen atom though the substituents each may be a hydrogen atom or another substituent; a is an integer satisfying 1 ≤ a ≤ (the number of aromatic ring substituents - 1); Z represents a residue resulting from the removal of m active hydrogen atoms from an m- or more-valent active hydrogen-containing compound; and m represents an integer of 1 to 10.

Further, the gist of a polyurethane resin producing process of the present invention is to react the above-mentioned polyol composition (A) for the production of polyurethane resins and an organic polyisocyanate (B).

### EFFECTS OF THE INVENTION

The polyurethane resin obtained by using the polyol composition (A) for the production of polyurethane resins of the present invention is superior in resin strength, such as hardness, and combustion resistance (flame retardancy) as compared with the conventional polyurethane resins.

### MODE FOR CARRYING OUT THE INVENTION

Examples of the vinyl polymerizable functional group represented by the above-mentioned formula (I) of the compound (a1) having a vinyl polymerizable functional group include at least one member selected from the group consisting of a (meth)acryloyl group, an allyl group, a propenyl group, and a 1-butenyl group. Of these, a (meth)acryloyl group, an allyl group, and a propenyl group are preferable, and a (meth)acryloyl group and an allyl group are more preferable. Herein a (meth)acryloyl group means an acryloyl group and/or a methacryloyl group, and the same written form is used hereinafter.

The compound (a1) having a vinyl polymerizable functional group has at least one above-mentioned vinyl polymerizable functional group in the molecule thereof. In terms of mechanical properties such as compressive hardness, and combustion resistance (flame retardancy), the number of the vinyl polymerizable functional group is preferably 1 to 20, more preferably 1 to 10, even more preferably 1 to 7, particularly preferably 1 to 5, and most preferably 2 to 4.

In terms of mechanical properties such as compressive hardness, and combustion resistance (flame retardancy), the vinyl polymerizable functional group concentration (mmol/g) of the compound (a1) is preferably 1.0 to 10.4, more preferably 2.0 to 10.4, and even more preferably 3.0 to 10.1.

In terms of mechanical properties, the compound (a1) preferably has an active hydrogen-containing group and a vinyl polymerizable functional group, and preferably comprises at least one active hydrogen compound selected from the group consisting of the following (a11) through (a16) and having an active hydrogen value of 10 to 1200 and a vinyl polymerizable functional group concentration (mmol/g) of 1.0 to 10.1.

Examples of the active hydrogen-containing groups which (a11) through (a16) have include at least one selected from the group consisting of a hydroxyl group, a mercapto group, a primary amino group, and a secondary amino group. In terms of combustion resistance (flame retardancy) and mechanical properties, a hydroxyl group and a mercapto group are preferable and a hydroxyl group is more preferable.

### (a11) Partial ester of polyol with unsaturated carboxylic acid

Examples of the polyol include polyhydric alcohols, polyhydric phenols, alkylene oxide (hereinafter abbreviated as AO) adducts of polyhydric alcohols or polyhydric phenols, AO adducts of amines, and polyester polyols each derived from a polyhydric alcohol and a polycarboxylic acid or a lactone.

Examples of the unsaturated carboxylic acid esters include (meth)acrylic acid esters.

Partial ester means that some of the hydroxy groups of a polyol have been esterified with an unsaturated carboxylic acid.

Examples of the polyhydric alcohol to be used for the production of (a11) include dihydric alcohols having a carbon atom number (hereinafter abbreviated as C) of 2 to 18 (preferably 2 to 12) [ethylene glycol, diethylene glycol, propylene glycol, dipropylene glycol, 1,4- and 1,3-butanediols, 1,6-hexanediol, neopentyl glycol, etc.], C3-18 (preferably 3-12) tri- to penta-hydric polyhydric alcohols [alkane polyols and their intramolecular or an intermolecular dehydrates, such as glycerol, trimethylolpropane, pentaerythritol, sorbitan, diglycerol; sugars and their derivatives, such as α-methylglucoside, xylitol, glucose, and fructose, etc.], C5-18 (preferably 5-12) hexa- to deca- or more-hydric polyhydric alcohols [hexa- to deca-hydric alkanepolyols and intramolecular or intermolecular dehydrates of polyhydric alkanepolyols, such as dipentaerythritol; sugars and their derivatives, such as sorbitol, mannitol, and sucrose; etc.], and combinations of two or more of the foregoing.

Examples of the polyhydric phenol to be used for the production of (a11) include dihydric phenols [monocyclic polyhydric phenols (hydroquinone, etc.), bisphenols (bisphenol A, bisphenol F, etc.), etc.], tri- to penta-hydric phenols [monocyclic polyhydric phenols (pyrogallol, phloroglucine, etc.), lower condensates of phenol compounds with formalin (trihydric to pentahydric) (with a number average molecular weight of 1000 or less) (novolak resin, intermediates for resol), etc.], hexa- to deca- or more-hydric phenols [lower condensates of phenol compounds with formalin (hexahydric or more) (with a number average molecular weight of 1000 or less) (novolak resin, intermediates for resol), etc.], condensates of phenol with alkanolamine (Mannich polyols), and combinations of two or more of the foregoing.

Examples of the amine in the AO adduct of an amine to be used for the production of (a11) include ammonia; C2-20 alkanolamines [mono-, di- or triethanolamine, isopropanolamine, aminoethylethanolamine, etc.]; C1-20 alkylamines [methylamine, ethylamine, n-butylamine, octylamine, etc.]; C2-6 alkylenediamines [ethylenediamine, hexamethylenediamine, etc.]; polyalkylenepolyamines having C2-6 alkylene groups (with a degree of polymerization of 2 to 8) [diethylenetriamine, triethylenetetramine, etc.]; C6-20 aromatic amines [aniline, phenylenediamine, tolylenediamine, xylylenediamine, methylenedianiline, diphenylether diamine, naphthalene diamine, anthracene diamine, etc.]; C4-15 alicyclic amines [isophoronediamine, cyclohexylenediamine, etc.]; C4-15 heterocyclic amines [piperazine, N-aminoethylpiperazine, 1,4-diaminoethylpiperazine, etc.], and combinations of two or more of the foregoing.

Examples of the AO to be added to polyhydric alcohols, polyhydric phenols, or amines include ethylene oxide (hereinafter abbreviated as EO), 1,2-propylene oxide (hereinafter abbreviated as PO), 1,3-propylene oxide, 1,2-, 1,3-, 1,4-, or 2,3-butylene oxide, α-olefin oxides (C5-30 or more), styrene oxide, and combinations of two or more of the foregoing (in the case of such a combination, any of random addition, block addition, and their combination may be used). Among these AOs, C2-8 ones are preferable, ones including PO and/or EO as a main component and optionally including 20% by weight or less of other AO are more preferable, and PO and/or EO is more preferable. The added mol number of AO per molecule is preferably 1 to 70, more preferably 1 to 50 from the viewpoint of ease of handling at the time of molding (the viscosity of a polyol component) and the strength of a polyurethane resin.

The AO addition reaction can be conducted by a conventional common method, and catalysts that can be used in the addition include alkali catalysts commonly used (KOH, CsOH, etc.), the catalyst disclosed in JP-A-2000-344881 [tris(pentafluorophenyl)borane, etc.], and the catalyst disclosed in JP-A-2002-308811 (magnesium perchlorate, etc.) (the same shall apply also to the following AO adducts).

Examples of the polyhydric alcohol to be used for polyester polyols among the polyols to be used for the production of (a11) include the same polyhydric alcohols as those described above. Examples of the polycarboxylic acid include C4-18 aliphatic polycarboxylic acids [succinic acid, adipic acid, sebacic acid, maleic acid, fumaric acid, etc.], C8-18 aromatic polycarboxylic acids [phthalic acid or its isomers, trimellitic acid, etc.], ester-forming derivatives of these polycarboxylic acids [acid anhydrides, lower alkyl esters having C1-4 alkyl groups, etc.], and combinations of two or more of the foregoing. Examples of the lactone include ε-caprolactone, γ-butyrolactone, γ-valerolactone, and combinations of two or more of the foregoing.

As the polyol to be used for the production of (a11) or (a12) described below, preferable in terms of the physical properties of a polyurethane resin are those having 3 to 10 hydroxyl groups, and more preferable are those having 3 to 6 hydroxyl groups.

Illustratively in the case of a partial (meth)acrylic acid ester or a partial allyl ether, (a11) or (a12) described below is obtained, for example, by partially (meth)acryloyl esterifying or partially allyl etherifying a polyol whose examples have been provided above by using an (meth)acryloyl halide or an allyl halide in such an equivalent ratio that at least one hydroxyl group will remain unreacted in one molecule. Examples of the (meth)acryloyl halide include (meth)acryloyl chloride, (meth)acryloyl bromide, and (meth)acryloyl iodide. Examples of the allyl halide include allyl chloride, allyl bromide, and allyl iodide. Alternatively, it can be produced by conducting an esterification reaction by a usual method using the above-mentioned polyol and (meth)acrylic acid in such an equivalent ratio that at least one hydroxyl group will remain unreacted in one molecule.

Further alternatively, (a11) can be obtained by adding the above-mentioned AO to 2-hydroxyethyl (meth)acrylate, an unsaturated carboxylic acid or a derivative thereof (ester, anhydride, etc.), or an unsaturated alcohol. In this case, among AOs, ones including PO and/or EO as a main component and optionally including 20% by weight or less of other AO are preferable in terms of the physical properties of a polyurethane resin, and PO and/or EO is more preferable. The addition reaction can be conducted by conventional standard procedures. The added mol number of AO is preferably 1 to 70, more preferably 1 to 50 from the viewpoint of ease of handling at the time of molding (the viscosity of a polyol component) and the strength of a polyurethane resin.

### (a12) Partial ether of polyol with unsaturated alkyl

Examples of the polyol include ones described in the above (a11). Examples of the unsaturated alkyl ether include allyl ether.

Partial ether means that some of the hydroxyl groups of a polyol have been unsaturated alkyl etherified.

### (a13) Partial amidation product of amine with unsaturated carboxylic acid

Examples of the unsaturated carboxylic acid amide include (meth)acrylamide.

Partial amide means that some of the active hydrogens which an amine has have been amidated with an unsaturated carboxylic acid.

### (a14) Partial alkylation product of amine with unsaturated alkyl

Examples of the unsaturated alkyl include allyl.

Partial alkylation means that some of the active hydrogens which an amine has have been substituted by an unsaturated alkyl group.

Examples of the amine to be used for the production of (a13) and (a14) include ones described in the above (a11).

(a13) and (a14) can be obtained, for example, by reacting a polyamine or an alkanolamine with the above-mentioned (meth)acryloyl halide or allyl halide in such an equivalent ratio that at least one amino group or hydroxyl group (in the case of alkanolamine) will remain unreacted in one molecule.

### (a15) Partial thioester of polythiol with unsaturated carboxylic acid

Examples of the unsaturated carboxylic acid thioester include (meth)acryl thioesters.
Partial thioester means that some of the mercapto groups of a polythiol have been thioesterified with an unsaturated carboxylic acid.

### (a16) Partial thioether of polythiol with unsaturated alkyl

Examples of the unsaturated alkyl thioether include allyl thioethers.

Partial thioether means that some of the hydroxyl groups of a polythiol have been unsaturated alkyl thioetherified.

As the polythiol to be used for the production of (a15) and (a16), polythiols having C2-18 and having 2 to 4 thiol groups are preferable in terms of the physical properties of a polyurethane resin, and examples thereof include ethanedithiol, 1,2-propanedithiol, 1,3-propanedithiol, 1,4-propanedithiol, 1,4-benzenedithiol, 1,2-benzenedithiol, bis(4-mercaptophenyl)sulfide, 4-tert-butyl-1,2-benzenedithiol, ethylene glycol dithioglycolate, trimethylolpropanetris(thioglycolate)thiocyanuric acid, di(2-mercaptoethyl)sulfide, and di(2-mercaptoethyl) ether.

(a15) and (a16) can be obtained by reacting the above-mentioned (meth)acryloyl halide or allyl halide with such a polythiol in such an equivalent ratio that at least one thiol group will remain unreacted in one molecule.

(a11) through (a16) each have at least one, preferably 1 to 8, more preferably 1 to 5, particularly preferably 1 to 3, and most preferably 1 to 2 active hydrogen-containing groups. When there are 1 to 8 active hydrogen-containing groups, the curability of the polyurethane resin at the time of molding is good.

As for the number of vinyl polymerizable functional groups and the number of active hydrogen-containing groups of (a1), an average number of such groups is used when the (a1) is not a single component, for example, it is a reaction mixture.

The active hydrogen value of the active hydrogen compounds (a11) through (a16) is 10 to 1200, and in terms of mechanical properties such as compressive hardness, it is preferably 20 to 1000, more preferably 30 to 600, particularly preferably 40 to 500, and most preferably 50 to 400.

The active hydrogen value as used herein means "56100/molecular weight per active hydrogen", and it is equivalent to a hydroxyl value when the group having active hydrogen is a hydroxy group. The method for measuring the active hydrogen value is not particularly restricted and may be any conventional method if this is a method by which a value defined above can be measured, and for hydroxyl values, the method disclosed in JIS K1557-1 is available, for example.

From the viewpoint of combustion resistance (flame retardancy), the vinyl polymerizable functional group concentration (mmol/g) of the compounds (a11) through (a16) is 1.0 to 10.1, and preferably 3.0 to 10.1.

In terms of combustion resistance (flame retardancy), the compound (a1) preferably comprises a compound (a17) having a vinyl polymerizable functional group and having no active hydrogen-containing group.

Examples of the vinyl polymerizable functional group of (a17) include the same ones as the vinyl polymerizable functional groups in the compounds (a11) through (a16), and preferable examples are also the same.

In terms of combustion resistance (flame retardancy), the number of the vinyl polymerizable functional groups in (a17) is preferably 1 to 20, and more preferably 1 to 10.

As (a17), aromatic hydrocarbon monomers [styrene, α-methylstyrene, etc.], unsaturated nitriles [(meth)acrylonitrile, etc.], etc. can be used. Preferable examples of (a17) include the following (a171) through (a176).

### (a171) Unsaturated carboxylic acid ester of polyol [especially, (meth)acrylic acid esters]

### (a172) Unsaturated alkyl ether of polyol [especially, allyl ether]

### (a173) Amine amidated with unsaturated carboxylic acid [especially, (meth)acrylamidated products]

### (a174) Unsaturated alkylated amine [especially, allylated amines]

### (a175) Unsaturated carboxylic acid thioester of polythiol [especially, (meth)acryl thioesters]

### (a176) Unsaturated alkyl thioether of polythiol [especially, allylated products]

Each of (a171) through (a176) can be obtained, for example, by conducting reaction in the production of the above-mentioned (a11) through (a16) such that no active hydrogen-containing groups will remain unreacted by varying the reaction mol ratio of raw materials to be used.

Among these options of (a1), (a11) and (a12) are preferable in terms of combustion resistance (flame retardancy) and mechanical properties. More preferable is (a11), and most preferable are partial (meth)acrylic acid esters of polyhydric alcohols and partial (meth)acrylic acid esters derived from AO adducts of polyhydric alcohols.

The content of the compound (a1) based on the weight of the polyol composition (A) is preferably 5 to 99.9% by weight, more preferably 5 to 70% by weight, and particularly preferably 5 to 60% by weight in terms of mechanical properties such as compressive hardness, and combustion resistance (flame retardancy).

In the present invention, the strength improver (a2) is represented by the above formula (II).

In formula (II), R1 represents a residue resulting from the removal of one active hydrogen atom from an active hydrogen-containing compound. The active hydrogen-containing compound includes hydroxyl group-containing compounds, amino group-containing compounds, carboxyl group-containing compounds, thiol group-containing compounds, and phosphoric acid compounds; and compounds each having two or more types of active hydrogen-containing functional groups in the molecule. Such active hydrogen-containing compounds can be used singly or in combination of two or more. That is, the plurality of R1s each may be the same or different.

Hydroxyl group-containing compounds include monohydric alcohols, di- to octahydric polyhydric alcohols, phenols, and polyhydric phenols. Specific examples include monohydric alcohols, such as methanol, ethanol, butanol, octanol, benzyl alcohol, and naphthylethanol; dihydric alcohols, such as ethylene glycol, propylene glycol, 1,3-and 1,4-butanediol, 1,6-hexanediol, 1,10-decanediol, diethylene glycol, neopentyl glycol, cyclohexanediol, cyclohexane dimethanol, 1,4-bis(hydroxymethyl)cyclohexane, and 1,4-bis(hydroxyethyl)benzene; trihydric alcohols, such as glycerol and trimethylolpropane; tetra to octahydric alcohols, such as pentaerythritol, sorbitol, mannitol, sorbitan, diglycerol, dipentaerythritol, sucrose, glucose, mannose, fructose, methyl glucoside, and derivatives thereof; phenols, such as phenol, fluoroglucine, cresol, pyrogallol, catechol, hydroquinone, bisphenol A, bisphenol F, bisphenol S, 1-hydroxynaphthalene, 1,3,6,8-tetrahydroxynaphthalene, anthrol, 1,4,5,8-tetrahydroxyanthracene, and 1-hydroxypyrene; polybutadiene polyols; castor oil-based polyols; polyfunctional (for example, the number of functional groups is 2 to 100) polyols, such as (co)polymers of hydroxyalkyl (meth)acrylates and polyvinyl alcohol, condensates of phenol and formaldehyde (novolak), and the polyphenol disclosed in U.S. Patent No. 3265641.

Amino group-containing compounds include amines, polyamines, and aminoalcohols. Specific examples thereof include ammonia; monoamines, such as alkylamines having 1 to 20 carbon atoms (butylamine, etc.) and aniline; aliphatic polyamines, such as ethylenediamine, hexamethylenediamine, and diethylenetriamine; heterocyclic polyamines, such as piperazine and N-aminoethylpiperazine; alicyclic polyamines, such as dicyclohexylmethanediamine and isophoronediamine; aromatic polyamines, such as phenylenediamine, tolylenediamine, and diphenylmethanediamine; alkanolamines, such as monoethanolamine, diethanolamine, and triethanolamine; polyamidepolyamines obtained by condensation of a dicarboxylic acid with an excess of polyamine; polyetherpolyamines; hydrazines (hydrazine, monoalkylhydrazines, etc.), dihydrazides (succinic acid dihydrazide, terephthalic acid dihydrazide, etc.), guanidines (butylguanidine, 1-cyanoguanidine, etc.); and dicyandiamides.

Examples of the carboxyl group-containing compound include aliphatic monocarboxylic acids, such as acetic acid and propionic acid; aromatic monocarboxylic acids, such as benzoic acid; aliphatic polycarboxylic acids, such as succinic acid, fumaric acid, sebacic acid, and adipic acid; aromatic polycarboxylic acids, such as phthalic acid, isophthalic acid, terephthalic acid, trimellitic acid, naphthalene-1,4dicarboxylic acid, naphthalene-2,3,6tricarboxylic acid, pyromellitic acid, diphenic acid, 2,3-anthracenedicarboxylic acid, 2,3,6-anthracenetricarboxylic acid, and pyrenedicarboxylic acid; and polycarboxylic acid polymers, such as (co)polymers of acrylic acid (the number of functional groups is 2 to 100).

Thiol group-containing compounds include monofunctional phenyl thiols, alkyl thiols, and polythiol compounds. Examples of the polythiols include di- to octafunctional polythiols. Specific examples include ethylene dithiol and 1,6-hexanedithiol.

Examples of the phosphoric acid compound include phosphoric acid, phosphorous acid, and phosphonic acid.

Compounds having two or more types of active hydrogen-containing functional groups (e.g., a hydroxy group, an amino group, a carboxyl group, a thiol group, and a phosphoric acid group) in a molecule can also be used as the active hydrogen-containing compound.

Alkylene oxide adducts of the above-described active hydrogen-containing compounds can also be used as the active hydrogen-containing compound.

Examples of the AO to be added to active hydrogen-containing compounds include AOs having 2 to 6 carbon atoms, such as EO, PO, 1,3-propylene oxide, 1,2 butylene oxide, and 1,4-butylene oxide. Among these, PO, EO, and 1,2-butylene oxide are preferred from the viewpoints of properties and reactivity. In the case that two or more types of AO are used (e.g., PO and EO), the additional method may be either block addition or random addition, and a combination thereof is also available.

Moreover, active hydrogen-containing compounds (polyester compounds) obtainable by condensation reactions of the above-described active hydrogen-containing compounds with polycarboxylic acids (aliphatic polycarboxylic acids or aromatic polycarboxylic acids) can be used as an active hydrogen-containing compound. As to each of the active hydrogen-containing compound and the polycarboxylic acid in such a condensation reaction, one species may be used or alternatively two or more species may be used in combination.

The term aliphatic polycarboxylic acid means any compound that satisfies the following (1) and (2):
(1) the number of the carboxyl groups which one molecule has is two or more, and
(2) no carboxyl group is not bonded directly to an aromatic ring.

Examples of the aliphatic polycarboxylic acid include succinic acid, adipic acid, sebacic acid, maleic acid, and fumaric acid.

The term aromatic polycarboxylic acid means any compound that satisfies the following (1) to (3):
(1) the number of the aromatic ring(s) which one molecule has is one or more,
(2) the number of the carboxyl groups which one molecule has is two or more,
(3) a carboxyl group is bonded directly to an aromatic ring.

Examples of the aromatic polycarboxylic acid include aromatic polycarboxylic acids having 8 to 18 carbon atoms, such as phthalic acid, isophthalic acid, terephthalic acid, 2,2'-bibenzyldicarboxylic acid, trimellitic acid, hemimellitic acid, trimesic acid, pyromellitic acid and naphthalene-1,4 dicarboxylic acid, naphthalene-2,3,6 tricarboxylic acid, diphenic acid, 2,3-anthracenedicarboxylic acid, 2,3,6-anthracenetricarboxylic acid, and pyrenedicarboxylic acid.

In performing a condensation reaction between a polycarboxylic acid with an active hydrogen-containing compound, it is also permitted to use an anhydride or a lower alkyl ester of the polycarboxylic acid.

From the viewpoints of ease of handling of the strength improver (a2) and improvement in the mechanical properties of polyurethane resins (i.e., elongation, tensile strength, and, for polyurethane foams, compressive hardness), hydroxyl group-containing compounds, amino group-containing compounds, AO adducts thereof, and polyester compounds obtained by a condensation reaction of an active hydrogen-containing compound with a polycarboxylic acid are preferred as the active hydrogen-containing compound to be used as R1, and more preferred are methanol, ethanol, butanol, ethylene glycol, propylene glycol, glycerol, pentaerythritol, sorbitol, sucrose, benzyl alcohol, phenol, methylamine, dimethylamine, ethylamine, diethylamine, butylamine, dibutylamine, phenylamine, diphenylamine, EO and/or PO adducts thereof, and condensates of such an active hydrogen compound with phthalic acid and/or isophthalic acid.

In formula (II), Y represents a residue resulting from removing a carboxyl group from a di- or more valent aromatic polycarboxylic acid (f). The aromatic ring of Y is composed of carbon atoms. Although the substituents located on the aromatic ring may each be either a hydrogen atom or another substituent, at least one substituent is a hydrogen atom. In other words, the aromatic ring of Y has at least one hydrogen atom bonded to a carbon atom constituting the aromatic ring.

Examples of another substituent include an alkyl group, a vinyl group, an allyl group, a cycloalkyl group, a halogen atom, an amino group, a carbonyl group, a carboxyl group, a hydroxyl group, a hydroxyamino group, a nitro group, a phosphino group, a thio group, a thiol group, an aldehyde group, an ether group, an aryl group, an amide group, a cyano group, a urea group, a urethane group, a sulfone group, an ester group, and an azo group. From the viewpoints of improvement in mechanical properties (elongation, tensile strength, compressive hardness) and cost, an alkyl group, a vinyl group, an allyl group, an amino group, an amide group, a urethane group, and a urea group are preferred as another substituent.

When the aromatic polycarboxylic acid (f) is a tri-or more-valent aromatic polycarboxylic acid, the arrangement of the substituents on Y preferable in terms of improvement in mechanical properties is a structure in which two carbonyl groups are located next to each other and hydrogen is located as a substituent at between a third carbonyl group and a first or second carbonyl group.

The di- or more-valent aromatic polycarboxylic acid (f) to constitute Y includes the above-described aromatic polycarboxylic acids; in terms of improvement in mechanical properties, tri- or more-valent aromatic polycarboxylic acids having 8 to 18 carbon atoms are preferable, and trimellitic acid, hemillitic acid, trimesic acid, pyromellitic acid, naphthalene-2,3,6tricarboxylic acid, and 2,3,6-anthracenetricarboxylic acid are more preferable.

From the viewpoints of ease of handling of the strength improver (a2) and improvement in the mechanical properties (elongation, tensile strength, and compressive hardness for polyurethane foam) of a polyurethane resin, the (f) to be used for Y is preferably a monocyclic compound, and more preferred are trimellitic acid and pyromellitic acid.

a in formula (II) is an integer that satisfies 1 ≤ a ≤ the number of the aromatic ring substituents - 1. The number of the aromatic ring substituents is the number of the substituents bonded to carbon atoms constituting an aromatic ring. For example, in a monocyclic aromatic ring composed of six carbon atoms, the number of the aromatic ring substituents is 6 and therefore a can be 1 to 5. In the case that the aromatic ring is a monocyclic aromatic ring, it is preferable from the viewpoint of improvement in mechanical properties (elongation, tensile strength, compressive hardness) that a is 2 or 3.

Z in formula (II) represents a residue resulting from removing m active hydrogen atoms from an m- or more-valent active hydrogen-containing compound. The active hydrogen-containing compound referred to herein includes the active hydrogen-containing compound represented by R1 mentioned above. The active hydrogen-containing compound represented by Z may be the same as a part of R1, and it is preferable from the viewpoint of improvement of the polyurethane resin in mechanical properties that at least one R1 is different from Z.

In formula (II), m represents an integer of 1 to 10.

In view of the ease of handling of the strength improver (a2) and the improvement of a polyurethane resin in mechanical properties (elongation, tensile strength, compressive hardness), it is preferable to use a hydroxyl group-containing compound, an amino group-containing compound, AO adducts thereof, or their condensates with polycarboxylic acids for Z, and m is preferably 1 to 8.

In view of the ease of handling (viscosity) at the time of molding and tensile strength, the hydroxyl value (mgKOH/g) of the strength improver (a2) is preferably 0 to 700, more preferably 0 to 650, and even more preferably 0 to 600.

In the present invention, the hydroxyl group value is measured in accordance with JIS K-1557.

The fact that the hydroxyl value of (a2) is 0 means that none of R1, Y and Z in formula (II) has a hydroxy group.

In view of improvement in the mechanical properties (elongation, tensile strength), the aromatic ring concentration (mmol/g) of the strength improver (a2) is preferably 0.1 to 10, more preferably 0.2 to 9.5, and even more preferably 0.3 to 9.

The aromatic ring concentration of (a2) means the number of moles of the aromatic rings contained in 1 g of the strength improver (a2).

From the viewpoint of improvement in mechanical properties (elongation, tensile strength), the formula weight of Y originating in (f), based on the number average molecular weight of the strength improver (a2), is preferably 0.5 to 50%, more preferably 4 to 47%, and even more preferably 6 to 45%.

In view of mechanical properties such as compressive hardness and combustion resistance (flame retardancy), the content of the strength improver (a2) based on the weight of the polyol composition (A) is preferably 0.1 to 95% by weight, more preferably 1 to 90% by weight, even more preferably 5 to 80% by weight, particularly preferably 10 to 75% by weight, and most preferably 10 to 65% by weight.

The polyol composition (A) for the production of polyurethane resins of the present invention should just comprise (a1) and a strength improver (a2), and the process for the production thereof may be a process that involves mixing (a1) with (a2).

The polyol composition (A) may contain a polyol (a3) in addition to the compound (a1) having a vinyl polymerizable functional group and the strength improver (a2) if necessary.

(a3) is a polyol having substantially no vinyl polymerizable functional groups; examples thereof include AO adducts (a31) of aliphatic amines, AO adducts (a32) of aromatic amines, AO adducts (a33) of polyhydric alcohols or polyhydric phenols, polyester polyols (a34) other than (a2), polymer polyols (a35), and the polyols (polyhydric alcohols, etc.) having been provided as examples of the polyol to be used for the production of (a1) excluding those mentioned above, and two or more of such polyols may be used in combination.

The "having substantially no vinyl polymerizable functional groups" as referred to herein means that the total degree of unsaturation measured by the method described in JIS K1557-3 is 0.2 meq/g or less.

The aliphatic amine of (a31) includes primary and/or secondary amines, wherein the number of primary and/or secondary amino groups is preferably 1 to 4, and more preferably 1 to 3, and the number of active hydrogens derived from amino groups is preferably 2 to 8, and more preferably 2 to 4.

Specific examples of (a31) include the alkanolamines, C1-20 alkylamines, C2-6 alkylenediamines, and polyalkylenepolyamines having C2-6 alkylene groups (with a degree of polymerization of 2 to 8) described in the above-mentioned section of (a1). Alkanolamines and alkylenediamines are preferable as (a31).

As the AO to be added in (a31), ones including PO and/or EO as a main component and optionally including 20% by weight or less of other AO are preferable in terms of the physical properties of a polyurethane resin, and PO and a combined use of PO and EO are particularly preferable.

Examples of the aromatic amine of (a32) include the C6-20 aromatic amines described in the above-mentioned section of (a1), and aniline, phenylenediamine, and tolylenediamine are preferred.

As the AO to be added in (a32), ones including PO and/or EO as a main component and optionally including 20% by weight or less of other AO are preferable in terms of the physical properties of a polyurethane resin, and PO and a combined use of PO and EO are particularly preferable.

Examples of the polyhydric alcohol of (a33) include those provided as examples of the polyhydric alcohol to be used for the production of (a1).

Examples of the polyhydric phenol of (a33) include those provided as examples of the polyhydric phenol to be used for the production of (a1).

As the AO to be added in (a33), ones including PO and/or EO as a main component and optionally including 20% by weight or less of other AO are preferable in terms of the physical properties of a polyurethane resin, and PO and a combined use of PO and EO are particularly preferable.

Examples of the polyester polyol of (a34) include the ones provided as examples of the polyester polyol to be used for the production of the above-mentioned (a1) excluding (a2), and polycondensates of the above-mentioned AO adducts (a33) of polyhydric alcohols or polyhydric phenols with the above-mentioned polycarboxylic acids.

Examples of the polymer polyol of (a35) include those commonly used for polyurethane resins, specifically, polymer polyols obtained by polymerizing a vinyl monomer (acrylonitrile, styrene, etc.) in a polyol, and mixtures thereof. Examples of the polyol include at least one member selected from polyether polyols resulting from the addition of the above-mentioned AO to the above-mentioned polycarboxylic acid, the above-mentioned polyester polyols and their AO adducts, lower molecular weight polyols (for example, the above-mentioned polyhydric alcohols), the above-mentioned alkanolamines, and the above-mentioned AO adducts (a33) of polyhydric alcohols or polyhydric phenols.

In (a35), preferable as the above-described AO are PO and/or EO. Among these, the polymer polyols obtained from (a33) are preferred in view of the physical properties of a polyurethane resin.

The method for producing (a35) can be conducted in the same manner as the polymerization method for the conventional polymer polyols. Examples of such methods include a method involving polymerizing a vinyl monomer in the presence of a polymerization initiator in a polyol containing a dispersing agent if necessary (the method disclosed in US No. 3,383,351, JP-B-39-24737, JP-B-47-47999, or JP-A-50-15894). Moreover, the polymerization can be conducted either in a batch system or a continuous system, and the polymerization can be conducted under normal pressure, increased pressure, or reduced pressure. According to need, a solvent and a chain transfer agent can be used. Preferably, the volume average particle diameter of the polymer in (a 35) is 0.3 to 15 µm.

Preferred as (a3) in terms of the physical properties of a polyurethane resin are those having 2 to 8, more preferably 2 to 6, hydroxyl groups.

In view of the ease of handling (the viscosity of a polyol component) at the time of molding and the strength of a polyurethane resin, the hydroxyl value of (a3) is preferably 20 to 1900, more preferably 20 to 1600, even more preferably 20 to 1000, particularly preferably 25 to 1000, and most preferably 30 to 1000.

Among such options of (a3), (a31), (a32), and (a33), i.e., polyether polyols, are preferable in the viewpoint of the production efficiency in the polyurethane production. More preferable are (a32) and (a33), and particularly preferable are (a32) and AO adducts of polyhydric alcohols.

The content of (a3) based on the weight of the polyol composition (A) is preferably 10 to 90% by weight, more preferably 20 to 80% by weight, and particularly preferably 30 to 70% by weight.

The polyol composition (A) for the production of polyurethane resins of the present invention can be used for the process for producing of various polyurethane resins involving reacting (A) with an organic polyisocyanate (B), and they will be used suitably for producing foamed or nonfoamed polyurethane resins.

To be used for producing foamed or nonfoamed polyurethane resins as referred to herein means to use (A) as at least part of a polyol component in producing the foamed or nonfoamed polyurethane resins by causing the polyol component and an isocyanate component to react together, if necessary, in the presence of an additive.

The process for producing a polyurethane resin in which (A) is used for the production of the polyurethane resin includes a process for producing a polyurethane resin by causing a polyol component and an isocyanate component to react together, wherein the polyol component contains the above-mentioned polyol composition (A) in an amount of 10 to 100% by weight, preferably 20 to 80% by weight, and even more preferably 30 to 60% by weight, based on the weight of the polyol component.

The organic polyisocyanate (B) to be used for the present invention may be any compound having two or more isocyanate groups in the molecule, and those commonly used for the production of polyurethane resins can be used. Examples of such isocyanates include aromatic polyisocyanates, aliphatic polyisocyanates, alicyclic polyisocyanates, araliphatic polyisocyanates, modified products thereof (e.g., urethane group, carbodiimide group, allophanate group, urea group, biuret group, isocyanurate group or oxazolidone group-containing modified products), and mixtures of two or more of these.

Examples of the aromatic polyisocyanates include C (excluding the carbon in an NCO group; the same shall apply to the following isocyanates) 6-16 aromatic diisocyanates, C6-20 aromatic triisocyanates, and crude products of these isocyanates. Specific examples include 1,3- and/or 1,4-phenylenediisocyanate, 2,4- and/or 2,6-tolylenediisocyanate (TDI), crude TDI, 2,4'- and/or 4,4'-diphenylmethanediisocyanate (MDI), and polymethylene polyphenylene polyisocyanate (crude MDI), naphthylene-1,5-diisocyanate, and triphenylmethane-4,4',4"-triisocyanate.

Examples of the aliphatic polyisocyanates include C6-10 aliphatic diisocyanates. Specific examples include 1,6-hexamethylene diisocyanate, 2,2,4-trimethylhexamethylene diisocyanate and lysine diisocyanate.

Examples of the alicyclic polyisocyanates include C6-16 alicyclic diisocyanates. Specific examples include isophorone diisocyanate (IPDI), 4,4'-dicyclohexylmethane diisocyanate, 1,4-cyclohexane diisocyanate, and norbornane diisocyanate.

Examples of the araliphatic polyisocyanates include C8-12 araliphatic diisocyanates. Specific examples include xylylene diisocyanate and α,α,α',α'-tetramethylxylylene diisocyanate.

Specific examples of modified polyisocyanates include urethane-modified MDI, carbodiimide-modified MDI, sucrose-modified TDI, and castor oil-modified MDI.

Preferred as the organic polyisocyanate (B) in terms of the physical properties of a polyurethane resin are aromatic polyisocyanates, more preferably TDI, crude TDI, MDI, crude MDI, and their isocyanate-modified forms, and particularly preferably TDI, MDI, crude MDI, and their modified forms.

Most preferred is at least one organic polyisocyanate (b) selected from the group consisting of MDI, crude MDI, and their modified forms.

The content of organic polyisocyanate (b) in (B) is preferably 40 to 100% by weight, and more preferably 80 to 100% by weight based on the weight of (B).

The isocyanate index (NCO INDEX) [(NCO group/active hydrogen atom-containing groups) equivalent ratio x 100] used in producing a polyurethane resin by reacting the polyol composition (A) with the organic polyisocyanate(B) is preferably 50 to 250, more preferably 70 to 200, particularly preferably 75 to 180, and most preferably 80 to 160.

In the present invention, it is preferable for the polyurethane resin in terms of mechanical properties such as compressive hardness that the polymerization of the vinyl polymerizable functional groups of (a1) and the polyurethane formation reaction by (a1), (a2), and optionally (a3) with (B) are carried out under such conditions that vinyl polymerized chain moieties and polyurethane chain moieties both resulting from those reactions will crosslink with each other. That the polymerization of vinyl polymerizable functional groups and the polyurethane formation reaction are carried out under such conditions that vinyl polymerized chain moieties and polyurethane chain moieties will crosslink with each other means that the polymerization of the vinyl polymerizable functional groups and the polyurethane formation reaction are carried out in parallel during at least some period of time. In order to increase the crosslink density and to improve mechanical properties, it is desirable to start one reaction before cure is advanced by the other reaction and thereby a resin is formed, and carry out the two reactions simultaneously.

For conducting the polymerization reaction of the vinyl polymerizable functional groups of (a1), it is preferable to use the below-mentioned radical polymerization initiator, and it is more preferable to use the radical polymerization initiator in an amount described below.

The polyurethane resin to be produced may be either a nonfoamed polyurethane resin or a foamed polyurethane resin obtained by reacting (A) and (B) in the presence of a foaming agent (C).

Water, hydrogen atom-containing halogenated hydrocarbons, low-boiling hydrocarbons, liquefied carbon dioxide, etc. may be used as the foaming agent (C) to be used if necessary for the present invention, and two or more of them may be used in combination.

Specific examples of the hydrogen atom-containing halogenated hydrocarbons include those of HCFC (hydrochlorofluorocarbon) type (e.g., HCFC-123 and HCFC-141b); and those of HFC (hydrofluorocarbon) type (e.g., HFC-245fa and HFC-365mfc).

The low-boiling hydrocarbons include hydrocarbons having a boiling point of -5 to 70°C, and specific examples thereof include butane, pentane, and cyclopentane. Among these, pentane and cyclopentane are preferable, and cyclopentane is more preferable.

Among such options of (C), a low-boiling hydrocarbon and a combined use of a low-boiling hydrocarbon and water are preferable.

When the foaming agent (C) is water, the usage amount thereof based on 100 parts by weight of the polyol composition (A) is preferably 0.1 to 30 parts by weight, and more preferably 1 to 20 parts by weight. In the case of a hydrogen atom-containing halogenated hydrocarbon, the usage amount is preferably not more than 50 parts by weight, and more preferably 10 to 45 parts by weight. In the case of a low boiling hydrocarbon, the usage amount is preferably 0.1 to 50 parts by weight, more preferably 1 to 40 parts by weight, particularly preferably 10 to 30 parts by weight, and most preferably 15 to 25 parts by weight. In the case of a liquefied carbon dioxide gas, the usage amount is preferably not more than 30 parts by weight, and more preferably 1 to 25 parts by weight. In the case of using a low-boiling hydrocarbon and water in combination, the above-described amount of the low-boiling hydrocarbon is preferably not more than 10 parts by weight, more preferably 0.1 to 5 parts by weight, particularly preferably 0.1 to 3 parts by weight, and most preferably 0.2 to 2 parts by weight.

In producing a polyurethane resin using the production process of the present invention, an additive (D) may be used if necessary. (D) includes a radical polymerization initiator and other additives.

Among such options of (D), examples of the radical polymerization initiator include azo compounds (for example, 2,2'-azobisisobutyronitrile, 2,2'-azobis(2,4-dimethylvaleronitrile) and 1,1'-azobis(1-acetoxy-1-phenylethane), organic peroxides (for example, dibenzoyl peroxide, benzoyl peroxide, tert-butyl hydroperoxide, and dicumyl peroxide), and water-soluble radical polymerization initiators such as a combination (redox catalyst) of a peroxide and dimethylaniline.

The amount of the radical polymerization initiator based on 100 parts by weight of the polyol compositions (A) is preferably not more than 10 parts by weight from the viewpoint of advancing the polymerization reaction along with the urethanization reaction, and it is more preferable, from the viewpoint of the curability of the polyurethane resin, from 0.001 to 5 parts by weight, particularly from 0.005 to 3 parts by weight, and most preferably from 0.01 to 2.5 parts by weight.

As far as other additives (D) concerned, a reaction can be conducted in the presence of conventional additives such as foam stabilizers (e.g., dimethylsiloxane-based and polyether modified dimethylsiloxane-based), urethanization catalysts (tertiary amine-based catalysts, such as triethylenediamine, N-ethylmorpholine, diethylethanolamine, N,N,N',N'-tetramethylhexamethylenediamine, tetramethylethylenediamine, pentamethyldiethylenetriamine, diaminobicyclooctane, 1,2-dimethylimidazole, 1-methylimidazole, 1-isobutyl-2-methylimidazole, bis(dimethylaminoethyl) ether, and 1,8-diazabicyclo-[5,4,0]-undecene-7, and/or metal catalysts, such as stannous octylate, stannic dibutyl dilaurate, and lead octylate), flame retardants (e.g., phosphoric esters and halogenated phosphoric esters), coloring agents (e.g., dyes and pigments), plasticizers (e.g., phthalic esters and adipic esters), organic fillers (e.g., synthetic short fibers and hollow microspheres made of a thermoplastic or thermosetting resin), antioxidants (e.g., hindered phenol based and hindered amine based) anti-aging agents (e.g., triazole based and benzophenone based), and release agents (wax based, metallic soap based, or their mixture based). Moreover, an additive prepared by using the above-mentioned (a) as a diluent [e.g., a solution of an amine-based catalyst in (a)] may be used.

Regarding the loadings of the respective ingredients per 100 parts by weight of the polyol composition (A), the loading of the foam stabilizer is preferably not more than 10 parts by weight, more preferably 0.01 to 7 parts by weight, particularly preferably 0.05 to 5 parts by weight, and most preferably 0.1 to 3 parts by weight. The loading of the urethanization catalyst is preferably not more than 15 parts by weight, more preferably 0.01 to 10 parts by weight, particularly preferably 0.02 to 5.0 parts by weight, and most preferably 0.1 to 3.5 parts by weight from the viewpoints of curability and advancing the urethanization reaction and the polymerization reaction simultaneously. The loading of the flame retardant is preferably not more than 50 parts by weight, more preferably 1 to 40 parts by weight, particularly preferably 3 to 30 parts by weight, and most preferably 5 to 25 parts by weight. The loading of the coloring agent is preferably not more than 2 parts by weight, and more preferably not more than 1 part by weight. The loading of the plasticizer is preferably not more than 50 parts by weight, more preferably not more than 20 parts by weight, and particularly preferably not more than 10 parts by weight. The loading of the organic filler is preferably not more than 50 parts by weight, more preferably not more than 40 parts by weight, and particularly preferably not more than 30 parts by weight. The loading of the antioxidant is preferably not more than 1 part by weight, and more preferably 0.01 to 0.5 parts by weight. The loading of the anti-aging agent is preferably not more than 1 part by weight, and more preferably 0.01 to 0.5 parts by weight. The loading of the release agent is preferably not more than 10 parts by weight, more preferably not more than 5 parts by weight, and particularly preferably not more than 3 parts by weight.

In the case of producing a foamed polyurethane resin, it is preferable to react the polyol composition (A) for the production of polyurethane resin and the organic polyisocyanate (B) in the presence of a foaming agent, a urethanization catalyst, and a foam stabilizer.

One example of the polyurethane resin producing process of the present invention is described below.

First, predetermined amounts of a polyol composition (A) and optionally a foaming agent (C) and/or an additive (D) are mixed. Subsequently, a mixed liquid prepared by rapidly mixing the mixture and an organic polyisocyanate (B) with a polyurethane foaming machine or a stirrer is poured into a mold and cured for a prescribed period of time, and then released from the mold, affording a polyurethane resin. The mold may be either an open mold or a closed mold, and the temperature may be either normal temperature or elevated temperature (e.g., 30 to 80°C). The urethanization reaction is preferably conducted by a one-shot method because if it is conducted by a prepolymer method, the viscosity of an unfoamed liquid prepared by mixing the ingredients will increase.

The polyurethane resin of the present invention may be a slab form, a molding produced by a RIM (reaction injection molding) process, or a foamed polyurethane resin produced by a mechanical frothing process.

The conditions under which a polyol component and an isocyanate component are caused to react may be conventional conditions usually used.

In one example, first, a polyol component and, if necessary, an additive are mixed in prescribed amounts. Subsequently, this mixture is rapidly mixed with an isocyanate component by using a polyurethane low-pressure or high-pressure injection foaming machine or a stirring machine. The resulting mixed liquid is poured into a sealed type or open type mold (made of metal or resin), caused to undergo a urethanization reaction to cure for a prescribed period of time, and then released from the mold, whereby a polyurethane is obtained.

### EXAMPLES

The present invention is further described by examples below, but the invention is not limited thereto.

The raw materials of the foamed polyurethane resins used in the following Examples and Comparative Examples are as follows.
(1) Compound having an active hydrogen-containing group and a vinyl polymerizable functional group
   (a11-1) Vinyl polymerizable functional group-containing active hydrogen compound with a hydroxyl value of 35 and a content of vinyl polymerizable functional groups in the molecule of 1.2 mmol/g having been obtained by reacting a PO adduct (number average molecular weight 1500, hydroxyl value 112.2) and acrylic acid with glycerol.
   (a11-2) Vinyl polymerizable functional group-containing active hydrogen compound with a hydroxyl value of 48 and a content of vinyl polymerizable functional groups in the molecule of 2.6 mmol/g having been obtained by reacting a PO adduct of pentaerythritol (number average molecular weight 1000, hydroxyl value 224.4) with acrylic acid.
   (a11-3) Vinyl polymerizable functional group-containing active hydrogen compound with a hydroxyl value of 232 and a content of vinyl polymerizable functional groups in the molecule of 8.3 mmol/g having been obtained by reacting trimethylol propane with acrylic acid.
   (a11-4) Vinyl polymerizable functional group-containing active hydrogen compound with a hydroxyl value of 157 and a content of vinyl polymerizable functional groups in the molecule of 5.6 mmol/g having been obtained by reacting acrylic acid with a polyether polyol with a hydroxyl value of 250 having been obtained by adding 2.7 mol of a PO to glycerol.
   (a11-5) Vinyl polymerizable functional group-containing active hydrogen compound with a hydroxyl value of 188 and a content of vinyl polymerizable functional groups in the molecule of 10.1 mmol/g having been obtained by reacting pentaerythritol with acrylic acid.
   (a11-6) Vinyl polymerizable functional group-containing active hydrogen compound with a hydroxyl value of 911 and a content of vinyl polymerizable functional groups in the molecule of 3.2 mmol/g having been obtained by reacting dipentaerythritol and acrylic acid.
   (a11-7) Vinyl polymerizable functional group-containing active hydrogen compound with a hydroxyl value of 1189 and a content of vinyl polymerizable functional groups in the molecule of 4.2 mmol/g having been obtained by reacting sorbitol and acrylic acid.
   (a11-8) Vinyl polymerizable functional group-containing active hydrogen compound with a hydroxyl value of 61 and a content of vinyl polymerizable functional groups in the molecule of 1.8 mmol/g having been obtained by reacting a PO adduct of sucrose (number average molecular weight 2500, hydroxyl value 179.5) with acrylic acid.
   (a11-9) Vinyl polymerizable functional group-containing active hydrogen compound with a hydroxyl value of 39 and a content of vinyl polymerizable functional groups in the molecule of 1.2 mmol/g having been obtained by reacting a PO adduct of sucrose (number average molecular weight 4000, hydroxyl value 112.2) with acrylic acid.
   (a11-10) Vinyl polymerizable functional group-containing active hydrogen compound with a hydroxyl value of 405 and a content of vinyl polymerizable functional groups in the molecule of 7.2 mmol/g having been obtained by reacting dipentaerythritol with acrylic acid.
   (a12-1) Vinyl polymerizable functional group-containing active hydrogen compound with a hydroxyl value of 302 and a content of vinyl polymerizable functional groups in the molecule of 5.4 mmol/g having been obtained by adding 2.2 mol of PO to allyl alcohol.
   (a12-2) Vinyl polymerizable functional group-containing active hydrogen compound with a hydroxyl value of 139 and a content of vinyl polymerizable functional groups in the molecule of 2.5 mmol/g having been obtained by adding 7.8 mol of EO to allyl alcohol.
   (a13-1) Vinyl polymerizable functional group-containing active hydrogen compound with a hydroxyl value of 555 and a content of vinyl polymerizable functional groups in the molecule of 9.9 mmol/g ("N-(hydroxymethyl)acrylamide" produced by Tokyo Chemical Industry Co., Ltd.).
(2) Compound having a vinyl polymerizable functional group and having no active hydrogen-containing group
   (a171-1) Compound having a vinyl polymerizable functional group and having no active hydrogen-containing group, the compound having a hydroxyl value of 0 and a content of vinyl polymerizable functional groups in the molecule of 10.4 mmol/g and having been obtained by reacting dipentaerythritol and acrylic acid.
   (a172-1) Compound having a vinyl polymerizable functional group and having no active hydrogen-containing group, the compound having a hydroxyl value of 0 and a content of vinyl polymerizable functional groups in the molecule of 10.1 mmol/g ("N,N-dimethylacrylamide" produced by Tokyo Chemical Industry Co., Ltd.).
(3) Active hydrogen compound having no vinyl polymerizable functional group
   (a3-1) Polyoxypropylene polyol with an average number of functional groups of 3.0 and a hydroxyl value of 56 having been obtained by adding PO to glycerol.
   (a3-2) Polyol with a hydroxyl value of 56 and a primary hydroxyl group ratio of 74% having been obtained by adding PO to glycerol produced according to JP-A-2000-344881.
   (a3-3) Polyoxyethylene polyoxypropylene polyol with an average number of functional groups of 3.0, a hydroxyl value of 34, and an EO content of 13% having been obtained by block adding PO and EO to glycerol.
   (a3-4) Polyoxyethylene polyoxypropylene polyol with an average number of functional groups of 3.0, a hydroxyl value of 34, and an EO content of 8% having been obtained by block adding PO and EO to glycerol.
   (a3-5) Polymer polyol (polymer content 32%) with a hydroxyl value of 25 obtained by copolymerizing styrene and acrylonitrile (weight ratio: 30/70) in polyoxyethylene polyoxypropylene polyol with an average number of functional groups of 4.0, a hydroxyl value of 37, and an EO content of 17.5% having been obtained by block adding PO and EO to pentaerythritol and polyoxyethylene polyoxypropylene polyol with an average number of functional groups of 3.0, a hydroxyl value of 37, and an EO content of 15% having been obtained by block adding PO and EO to glycerol.
   (a3-6) Polyoxyethylene polyoxypropylene polyol with an average number of functional groups of 3.0, a hydroxyl value of 24, and a total content of EO units of 72% having been obtained by random adding PO and EO to glycerol.
   (a3-7) Polyether polyol with a hydroxyl value of 400 obtained by adding 7.3 mol of PO to pentaerythritol.
   (a3-8) Polyoxyethylene polyoxypropylene polyol with an average number of functional groups of 2.0 and a hydroxyl value of 125 having been obtained by block adding PO and EO to propylene glycol.
   (a3-9) Polyoxyethylene polyol with an average number of functional groups of 2.0 and a hydroxyl value of 560 obtained by adding EO to ethylene glycol.
   (a3-10) Polyoxypropylene polyol with an average number of functional groups of 8.0 and a hydroxyl value of 420 obtained by adding PO to sucrose.
   (a3-11) Polyester polyol with an average number of functional groups of 3.0 and a hydroxyl value of 56 obtained by adding phthalic anhydride to glycerol and subsequently block adding PO and EO.
(4) Other polyols
   (s-1) Polyoxyethylene polyol with an average number of functional groups of 6.0 and a hydroxyl value of 1055 having been obtained by adding EO to sorbitol.
   (s-2) Polyoxyethylene polyol with an average number of functional groups of 3.0 and a hydroxyl value of 842 having been obtained by adding EO to glycerol.
   (s-3) Ethylene glycol with an average number of functional groups of 2.0 and a hydroxyl value of 1810.

### EXAMPLES

### Production Example 1

### [Production of Strength Improver (a2-1)]

In an autoclave made of stainless steel, equipped with a stirring device and a temperature controlling device, 1 mol of glycerol PO adduct (a number average molecular weight: 1700, a hydroxyl value: 99.0), 6 mol of phthalic anhydride and 0.020 mol of an alkali catalyst (N-ethylmorpholine) were charged and then reacted under a nitrogen atmosphere at 0.20 MPa and 120 ± 10°C for 1 hour, performing a half-esterification. After the half-esterification, 6 mol of EO was added dropwise over 5 hours while controlling to 120 ± 10°C and pressure of 0.50 MPa or less, followed by aging at 120 ± 10°C for 1 hour. After completion of aging, the alkali catalyst was removed under reduced pressure of 10 kPa for 1 hour to obtain a strength improver (a2-1). The values of (a2-1) were as follows. A hydroxyl value (mgKOH/g) = 59.0, an aromatic ring concentration (mmol/g) = 2.1.

### Production Example 2

### [Production of Strength Improver (a2-2)]

In the same autoclave as in Production Example 1, 1 mol of glycerol PO adduct (a number average molecular weight: 3000, a hydroxyl value: 56.1), 3 mol of phthalic anhydride and 0.020 mol of an alkali catalyst (N-ethylmorpholine) were charged and then reacted under a nitrogen atmosphere at 0.20 MPa and 120 ± 10°C for 1 hour, performing a half-esterification. After the half-esterification, 3 mol of EO was added dropwise over 5 hours while controlling to 120 ± 10°C and pressure of 0.50 MPa or less, followed by aging at 120 ± 10°C for 1 hour. After completion of aging, the alkali catalyst was removed under reduced pressure of 10 kPa for 1 hour to obtain a strength improver (a2-2). The values of (a2-2) were as follows. A hydroxyl value (mgKOH/g) = 47.1, an aromatic ring concentration (mmol/g) = 0.8.

### Production Example 3

### [Production of Strength Improver (a2-3)]

In the same autoclave as in Production Example 1, 1 mol of glycerol PO adduct (a number average molecular weight: 1500, a hydroxyl value: 112.2), 6 mol of phthalic anhydride, 1 mol of trimellitic anhydride and 0.020 mol of an alkali catalyst (N-ethylmorpholine) were charged and then reacted under a nitrogen atmosphere at 0.20 MPa and 120 ± 10°C for 1 hour, performing a half-esterification. After the half-esterification, 8 mol of EO was added dropwise over 5 hours while controlling to 120 ± 10°C and pressure of 0.50 MPa or less, followed by aging at 120 ± 10°C for 1 hour. After completion of aging, the alkali catalyst was removed under reduced pressure of 10 kPa for 1 hour to obtain a strength improver (a2-3). The values of (a2-3) were as follows. A hydroxyl value (mgKOH/g) = 76.5, an aromatic ring concentration (mmol/g) = 2.4.

### Production Example 4

### [Production of Strength Improver (a2-4)]

In the same autoclave as in Production Example 1, 1 mol of propyleneglycol PO adduct (a number average molecular weight: 1000, a hydroxyl value: 112.2), 4 mol of phthalic anhydride, 2 mol of trimellitic anhydride and 0.020 mol of an alkali catalyst (N-ethylmorpholine) were charged and then reacted under a nitrogen atmosphere at 0.20 MPa and 120 ± 10°C for 1 hour, performing a half-esterification. After the half-esterification, 8 mol of EO was added dropwise over 5 hours while controlling to 120 ± 10°C and pressure of 0.50 MPa or less, followed by aging at 120 ± 10°C for 1 hour. After completion of aging, the alkali catalyst was removed under reduced pressure of 10 kPa for 1 hour to obtain a strength improver (a2-4). The values of (a2-4) were as follows. A hydroxyl value (mgKOH/g) = 96.4, an aromatic ring concentration (mmol/g) = 2.6.

### Production Example 5

### [Production of Strength Improver (a2-5)]

In the same autoclave as in Production Example 1, 1 mol of glycerol PO adduct (a number average molecular weight: 3000, a hydroxyl value: 56.1), 3 mol of phthalic anhydride, 1 mol of trimellitic anhydride and 0.020 mol of an alkali catalyst (N-ethylmorpholine) were charged and then reacted under a nitrogen atmosphere at 0.20 MPa and 120 ± 10°C for 1 hour, performing a half-esterification. After the half-esterification, 5 mol of EO was added dropwise over 5 hours while controlling to 120 ± 10°C and pressure of 0.50 MPa or less, followed by aging at 120 ± 10°C for 1 hour. After completion of aging, the alkali catalyst was removed under reduced pressure of 10 kPa for 1 hour to obtain a strength improver (a2-5). The values of (a2-5) were as follows. A hydroxyl value (mgKOH/g) = 58.2, an aromatic ring concentration (mmol/g) = 1.0.

### Production Example 6

### [Production of Strength Improver (a2-6)]

In the same autoclave as in Production Example 1, 1 mol of glycerol PO and EO adduct (a number average molecular weight: 5000, a hydroxyl value: 34.0, polyol obtained by a block addition of PO and EO in this order to glycerol, PO/EO(weight ratio) =80/20), 3 mol of phthalic anhydride and 0.020 mol of an alkali catalyst (N-ethylmorpholine) were charged and then reacted under a nitrogen atmosphere at 0.20 MPa and 120 ± 10°C for 1 hour, performing a half-esterification. After the half-esterification, 3 mol of EO was added dropwise over 5 hours while controlling to 120 ± 10°C and pressure of 0.50 MPa or less, followed by aging at 120 ± 10°C for 1 hour. After completion of aging, the alkali catalyst was removed under reduced pressure of 10 kPa for 1 hour to obtain a strength improver (a2-6). The values of (a2-6) were as follows. A hydroxyl value (mgKOH/g) = 30.2, an aromatic ring concentration (mmol/g) = 0.5.

### Production Example 7

### [Production of Strength Improver (a2-7)]

In the same autoclave as in Production Example 1, 1 mol of glycerol PO and EO adduct (a number average molecular weight: 6000, a hydroxyl value: 28.0, polyol obtained by a block addition of PO and EO in this order to glycerol, PO/EO(weight ratio) =84/16), 3 mol of phthalic anhydride and 0.020 mol of an alkali catalyst (N-ethylmorpholine) were charged and then reacted under a nitrogen atmosphere at 0.20 MPa and 120 ± 10°C for 1 hour, performing a half-esterification. After the half-esterification, 3 mol of EO was added dropwise over 5 hours while controlling to 120 ± 10°C and pressure of 0.50 MPa or less, followed by aging at 120 ± 10°C for 1 hour. After completion of aging, the alkali catalyst was removed under reduced pressure of 10 kPa for 1 hour to obtain a strength improver (a2-7). The values of (a2-7) were as follows. A hydroxyl value (mgKOH/g) = 25.6, an aromatic ring concentration (mmol/g) = 0.5.

### Production Example 8

### [Production of Strength Improver (a2-8)]

In the same autoclave as in Production Example 1, 1 mol of glycerol PO and EO adduct (a number average molecular weight: 6000, a hydroxyl value: 28.0, polyol obtained by a block addition of PO and EO in this order to glycerol, PO/EO(weight ratio) =84/16), 6 mol of phthalic anhydride, 1 mol of trimellitic anhydride and 0.020 mol of an alkali catalyst (N-ethylmorpholine) were charged and then reacted under a nitrogen atmosphere at 0.20 MPa and 120 ± 10°C for 1 hour, performing a half-esterification. After the half-esterification, 8 mol of EO was added dropwise over 5 hours while controlling to 120 ± 10°C and pressure of 0.50 MPa or less, followed by aging at 120 ± 10°C for 1 hour. After completion of aging, the alkali catalyst was removed under reduced pressure of 10 kPa for 1 hour to obtain a strength improver (a2-8). The values of (a2-8) were as follows. A hydroxyl value (mgKOH/g) = 30.2, an aromatic ring concentration (mmol/g) = 0.9.

### Production Example 9

### [Production of Strength Improver (a2-9)]

In the same autoclave as in Production Example 1, 1 mol of glycerol PO and EO adduct (a number average molecular weight: 5000, a hydroxyl value: 34.0, polyol obtained by a block addition of PO and EO in this order to glycerol, PO/EO(weight ratio) =80/20), 6 mol of phthalic anhydride and 0.020 mol of an alkali catalyst (N-ethylmorpholine) were charged and then reacted under a nitrogen atmosphere at 0.20 MPa and 120 ± 10°C for 1 hour, performing a half-esterification. After the half-esterification, 6 mol of EO was added dropwise over 5 hours while controlling to 120 ± 10°C and pressure of 0.50 MPa or less, followed by aging at 120 ± 10°C for 1 hour. After completion of aging, the alkali catalyst was removed under reduced pressure of 10 kPa for 1 hour to obtain a strength improver (a2-9). The values of (a2-9) were as follows. A hydroxyl value (mgKOH/g) = 27.4, an aromatic ring concentration (mmol/g) = 1.0.

### Production Example 10

### [Production of Strength Improver (a2-10)]

In the same autoclave as in Production Example 1, 1 mol of the polyol (a3-8) (a raw material composing Z), 2 mol of trimellitic anhydride (a raw material composing Y), 0.02 mol of N-ethylmorpholine as a catalyst and 2 mol of toluene as a solvent were charged and then a half-esterification was performed at 80 ± 10°C for 2 hours under a nitrogen atmosphere. After the half-esterification, 4 mol of EO as a raw material composing R1 was added dropwise over 2 hours while controlling to 80 ± 10°C and 0.5 MPa or less, followed by aging for 3 hours. After completion of aging, the catalyst and the solvent were removed at 80 ± 10°C and 10 kPa to obtain a strength improver (a2-10). The values of (a2-10) were as follows. A hydroxyl value (mgKOH/g) = 153.7, an aromatic ring concentration (mmol/g) = 1.4.

### Production Example 11

### [Production of Strength Improver (a2-11)]

In the production of the strength improver (a2-10), except that the polyol (a3-9) was used instead of the polyol (a3-8), a strength improver (a2-11) was produced in the same manner. The values of (a2-11) were as follows. A hydroxyl value (mgKOH/g) = 295.3, an aromatic ring concentration (mmol/g) = 2.6.

### Production Example 12

### [Production of Strength Improver (a2-12)]

In the same autoclave as in Production Example 1, 1 mol of the polyol (a3-8) (a raw material composing Z), 2 mol of trimellitic anhydride (a raw material composing Y), 2.2 mol of triethylamine as a catalyst and 2 mol of THF as a solvent were charged and then a half-esterification was performed at 80 ± 10°C for 2 hours under a nitrogen atmosphere. After the half-esterification, 4 mol of benzyl chloride as a raw material composing R1 was added and reacted at 80 ± 10°C for 6 hours. After completion of the reaction, the precipitated salt was filtered off, then the organic layer was washed with water and the subject material was extracted with toluene and separated. The organic layer was dried with anhydrous magnesium sulfate, then the solvent was removed at 80 ± 10°C and 10 kPa to obtain a strength improver (a2-12). The values of (a2-12) were as follows. A hydroxyl value (mgKOH/g) = 0, an aromatic ring concentration (mmol/g) = 3.7.

### Production Example 13

### [Production of Strength Improver (a2-13)]

In the production of the strength improver (a2-12), except that the polyol (a3-9) was used instead of the polyol (a3-8), a strength improver (a2-13) was produced in the same manner. The values of (a2-13) were as follows. A hydroxyl value (mgKOH/g) = 0, an aromatic ring concentration (mmol/g) = 6.4.

### Production Example 14

### [Production of Strength Improver (a2-14)]

In the same autoclave as in Production Example 1, 1 mol of benzenetetraamine (a raw material composing Z), 8 mol of pyromellitic anhydride (a raw material composing Y), 0.24 mol of N-ethylmorpholine as a catalyst and 10 mol of THF as a solvent were charged and then a half-esterification was performed at 80 ± 10°C for 2 hours under a nitrogen atmosphere. After the half-esterification, 8 mol of water was added and reacted for 30 minutes, then 24 mol of EO as a raw material composing R1 was added dropwise over 2 hours while controlling to 80 ± 10°C and 0.5 MPa or less, followed by aging for 3 hours. After completion of aging, the catalyst and the solvent were removed at 80 ± 10°C and 10 kPa to obtain a strength improver (a2-14). The values of (a2-14) were as follows. A hydroxyl value (mgKOH/g) = 428.5, an aromatic ring concentration (mmol/g) = 2.6.

### Production Example 15

### [Production of Strength Improver (a2-15)]

In a reaction vessel equipped with a stirring device, a temperature controlling device, a pressure controlling device, a condenser, a trap and a liquid circulating pump, 1 mol of polyol (a3-10) (a raw material composing Z), 8 mol of trimellitic anhydride (a raw material composing Y), 0.16 mol of N-ethylmorpholine as a catalyst and 12 mol of toluene as a solvent were charged and then a half-esterification was performed under a nitrogen atmosphere at 80 ± 10°C and 0.1 MPa for 2 hours. After the half-esterification, 16 mol of benzyl thiol as a raw material composing R1 was added and reacted for 6 hours while controlling to 95 ± 5°C and 0.06 MPa. During the reaction, volatilizing toluene and water were condensed with the condenser and toluene separated with the trap was returned continuously to the reaction vessel. After the reaction, the catalyst and the solvent were removed at 80 ± 10°C and 10 kPa to obtain a strength improver (a2-15). The values of (a2-15) were as follows. A hydroxyl value (mgKOH/g) = 0, an aromatic ring concentration (mmol/g) = 5.6.

### Production Example 16

### [Production of Strength Improver (a2-16)]

In the production of the strength improver (a2-15), except that 8 mol of ethylene glycol and 8 mol of benzyl amine were used instead of 16 mol of benzyl thiol as a raw material composing R1, and 10 mol of toluene was used as a solvent, a strength improver (a2-16) was produced in the same manner. The values of (a2-16) were as follows. A hydroxyl value (mgKOH/g) = 127.3, an aromatic ring concentration (mmol/g) = 4.5.

### Production Example 17

### [Production of Strength Improver (a2-17)]

In the production of the strength improver (a2-15), except that pyromellitic anhydride was used instead of trimellitic anhydride, 24 mol of diphenylamine was used instead of 16 mol of benzyl thiol as a raw material composing R1, 0.24 mol of N-ethylmorpholine as a catalyst and 18 mol of toluene as a solvent were used, a strength improver (a2-17) was produced in the same manner. The values of (a2-17) were as follows. A hydroxyl value (mgKOH/g) = 0, an aromatic ring concentration (mmol/g) = 8.7.

### Production Example 18

### [Production of Strength Improver (a2-18)]

In the production of the strength improver (a2-17), except that the polyol (a3-11) was used instead of diphenylamine as a raw material composing R1 and 203 mol of toluene was used as a solvent, a strength improver (a2-18) was produced in the same manner. The values of (a2-18) were as follows. A hydroxyl value (mgKOH/g) = 36.2, an aromatic ring concentration (mmol/g) = 2.0.

### Production Example 19

### [Production of Strength Improver (a2-19)]

In a reaction vessel equipped with a stirring device, a temperature controlling device, a pressure controlling device, a condenser, a trap and a liquid circulating pump, 1 mol of diethylene glycol (a raw material composing Z), 1 mol of trimesic acid (a raw material composing Y), 0.02 mol of N-ethylmorpholine as a catalyst and 2 mol of toluene as a solvent were charged and then a half-esterification was performed at 95 ± 5°C and 0.06 MPa for 4 hours. During the reaction, volatilizing toluene and water were condensed with the condenser and toluene separated with the trap was returned continuously to the reaction vessel. Then, 4 mol of dimethyl phosphate as a raw material composing R1 was added and reacted at 95 ± 5°C and 0.06 MPa for 6 hours. During the reaction, volatilizing toluene and water were condensed with the condenser and toluene separated with the trap was returned continuously to the reaction vessel. After the reaction, the catalyst and the solvent were removed at 80 ± 10°C and 10 kPa to obtain a strength improver (a2-19). The values of (a2-19) were as follows. A hydroxyl value (mgKOH/g) = 0, an aromatic ring concentration (mmol/g) = 2.2.

### Production Example 20

### [Production of Strength Improver (a2-20)]

In an autoclave made of stainless steel, equipped with a stirring device and a temperature controlling device, 1 mol of diethylene glycol (a number average molecular weight: 106, a hydroxyl value: 1058), 1 mol of trimellitic anhydride and 0.010 mol of an alkali catalyst (N-ethylmorpholine) were charged and then reacted under a nitrogen atmosphere at 0.10 MPa and 120 ± 10°C for 1 hour, performing a half-esterification. After the half-esterification, 2 mol of EO was added dropwise over 5 hours while controlling to 120 ± 10°C and pressure of 0.40 MPa or less, followed by aging at 120 ± 10°C for 1 hour. After completion of aging, the alkali catalyst was removed under reduced pressure of 10 kPa for 1 hour to obtain a strength improver (a2-20). The values of (a2-20) were as follows. A hydroxyl value (mgKOH/g) = 436, an aromatic ring concentration (mmol/g) = 2.6.

### Production Example 21

### [Production of Strength Improver (a2-21)]

In an autoclave made of stainless steel, equipped with a stirring device and a temperature controlling device, 1 mol of glycerol PO adduct ("SANNIX PP-600", manufactured by Sanyo Chemical Industries, Ltd.; a number average molecular weight: 600, a hydroxyl value: 187), 1 mol of trimellitic anhydride and 0.010 mol of an alkali catalyst (N-ethylmorpholine) were charged and then reacted under a nitrogen atmosphere at 0.10 MPa and 120 ± 10°C for 1 hour, performing a half-esterification. After the half-esterification, 2 mol of EO was added dropwise over 5 hours while controlling to 120 ± 10°C and pressure of 0.40 MPa or less, followed by aging at 120 ± 10°C for 1 hour. After completion of aging, the alkali catalyst was removed under reduced pressure of 10 kPa for 1 hour to obtain a strength improver (a2-21). The values of (a2-21) were as follows. A hydroxyl value (mgKOH/g) = 191, an aromatic ring concentration (mmol/g) = 1.1.

### Production Example 22

### [Production of Strength Improver (a2-22)]

In an autoclave made of stainless steel, equipped with a stirring device and a temperature controlling device, 1 mol of glycerol PO adduct ("SANNIX PP-200", manufactured by Sanyo Chemical Industries, Ltd.; a number average molecular weight: 200, a hydroxyl value: 561), 1 mol of phthalic anhydride and 0.010 mol of an alkali catalyst (N-ethylmorpholine) were charged and then reacted under a nitrogen atmosphere at 0.10 MPa and 120 ± 10°C for 1 hour, performing a half-esterification. After the half-esterification, 1 mol of EO was added dropwise over 5 hours while controlling to 120 ± 10°C and pressure of 0.40 MPa or less, followed by aging at 120 ± 10°C for 1 hour. After completion of aging, the alkali catalyst was removed under reduced pressure of 10 kPa for 1 hour to obtain a strength improver (a2-22). The values of (a2-22) were as follows. A hydroxyl value (mgKOH/g) = 291, an aromatic ring concentration (mmol/g) = 2.6.

### Production Example 23

### [Production of Strength Improver (a2-23)]

In an autoclave made of stainless steel, equipped with a stirring device and a temperature controlling device, 1 mol of glycerol PO adduct ("SANNIX PP-200", manufactured by Sanyo Chemical Industries, Ltd.; a number average molecular weight: 200, a hydroxyl value: 561), 1 mol of trimellitic anhydride and 0.010 mol of an alkali catalyst (N-ethylmorpholine) were charged and then reacted under a nitrogen atmosphere at 0.10 MPa and 120 ± 10°C for 1 hour, performing a half-esterification. After the half-esterification, 2 mol of EO was added dropwise over 5 hours while controlling to 120 ± 10°C and pressure of 0.40 MPa or less, followed by aging at 120 ± 10°C for 1 hour. After completion of aging, the alkali catalyst was removed under reduced pressure of 10 kPa for 1 hour to obtain a strength improver (a2-23). The values of (a2-23) were as follows. A hydroxyl value (mgKOH/g) = 351, an aromatic ring concentration (mmol/g) = 2.1.

### Production Example 24

### [Production of Strength Improver (a2-24)]

In an autoclave made of stainless steel, equipped with a stirring device and a temperature controlling device, 1 mol of pentaerythritol PO adduct ("SANNIX HD-402", manufactured by Sanyo Chemical Industries, Ltd.; a number average molecular weight: 561, a hydroxyl value: 400), 2 mol of trimellitic anhydride and 0.010 mol of an alkali catalyst (N-ethylmorpholine) were charged and then reacted under a nitrogen atmosphere at 0.10 MPa and 120 ± 10°C for 1 hour, performing a half-esterification. After the half-esterification, 2 mol of EO was added dropwise over 5 hours while controlling to 120 ± 10°C and pressure of 0.40 MPa or less, followed by aging at 120 ± 10°C for 1 hour. After completion of aging, the alkali catalyst was removed under reduced pressure of 10 kPa for 1 hour to obtain a strength improver (a2-24). The values of (a2-24) were as follows. A hydroxyl value (mgKOH/g) = 300, an aromatic ring concentration (mmol/g) = 1.8.

(4) Foaming agents (C)
   (C1) Water
   (C2) Cyclopentane
(5) Additives (D)
   (D1) Trichloropropyl phosphate ("TMCPP" manufactured by Daihachi Chemical Industry CO., Ltd.)
   (D2) Amine catalyst A ("U-CAT 1000" manufactured by San-Apro Ltd.)
   (D3) Amine catalyst B ("TOYOCAT-DT" manufactured by TOSOH Corp.)
   (D4) "TOYOCAT ET" manufactured by TOSOH Corp. (70% dipropylene glycol solution of bis(dimethylaminoethyl) ether)
   (D5) "NEOSTAN U-28" manufactured by Nitto Kasei Co., Ltd. (stannous octoate)
   (D6) "DABCO-33LV" manufactured by Air Products Japan, Inc. (33 weight% dipropylene glycol solution of triethylene diamine)
   (D7) "L-540" manufactured by Dow Corning Toray Co., Ltd.
   (D8) "TEGOSTAB B8737" manufactured by Evonik Industries AG. (polysiloxane type foam stabilizer)
   (D9) polyethersiloxane polymer ("SH-193" manufactured by Dow Corning Toray Co., Ltd.)
   (D10) radical polymerization initiator: t-butylhydroperoxide ("PERBUTYL H-69" manufactured by NOF Corp.)
(6) Organic polyisocyanate (B)
   (B1) TDI-80 (2,4- and 2,6-TDI,a ratio of 2,4-isomer is 80 % / crude MDI (average number of functionality: 2.9) =80/20 (ratio by weight))
   (B2) "CE-729" manufactured by Nippon Polyurethane Industry Co., Ltd. (TDI-80 (2,4- and 2,6-TDI,a ratio of 2,4-isomer is 80 % / crude MDI (average number of functionality: 2.9) =80/20 (ratio by weight))
   (B3) Crude MDI ("Millionate MR-200" manufactured by Nippon Polyurethane Industry Co., Ltd.), NCO%=31.0.

### [Examples 1 to 14, Comparative Examples 1 to 3]

Soft polyurethane foams were produced under the following foaming conditions using a polyol premix and a polyisocyanate (B) in the numbers of parts given in Tables 1 to 3 to form foams, and then physical properties of the soft polyurethane foams after being left at rest for a whole day and night were measured. The measured values of physical properties are also provided in Tables 1 to 3.

### (Foaming conditions)

BOX SIZE: 30 cm x 30 cm x 30 cm, lidless box
Material: wood
Mixing method: hand mixing

### [Examples 15 to 24, Comparative Examples 4 to 6]

Soft polyurethane foams were expanded using a polyol premix and a polyisocyanate (B) in the numbers of parts given in Tables 2 and 3 within a mold under the following foaming conditions to form foams, and then the foams were taken out of the mold and physical properties of the soft polyurethane foams after being left at rest for a whole day and night were measured. The measured values of physical properties are also provided in Tables 2 and 3.

### (Foaming conditions)

Mold size: 40 cm x 40 cm x 10 cm (height)
Mold temperature: 65°C
Mold material: aluminum
Mixing method:
   High-pressure urethane foaming machine (manufactured by Polymer Engineering Co., LTD.); polyol premix and an isocyanate are mixed at 15 MPa.

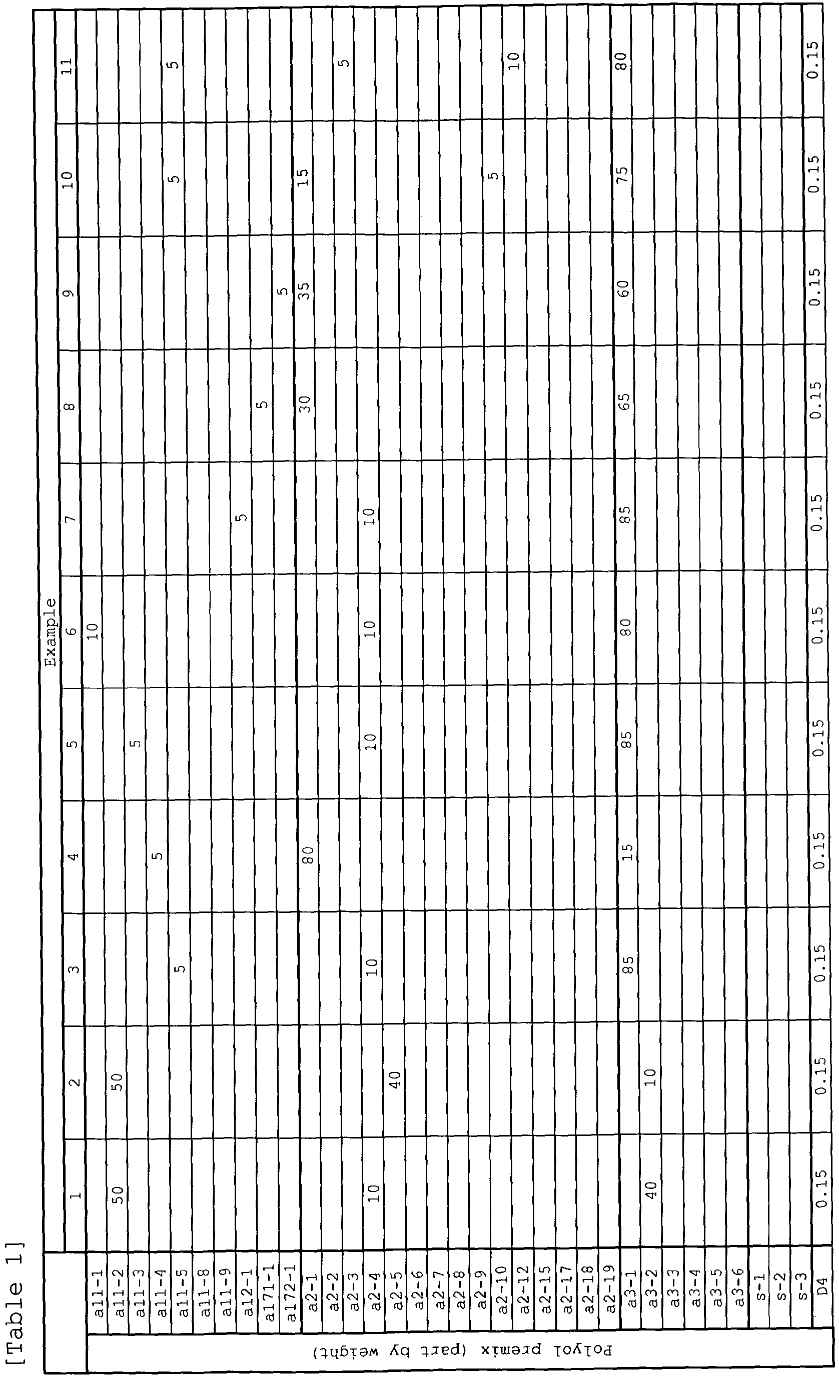

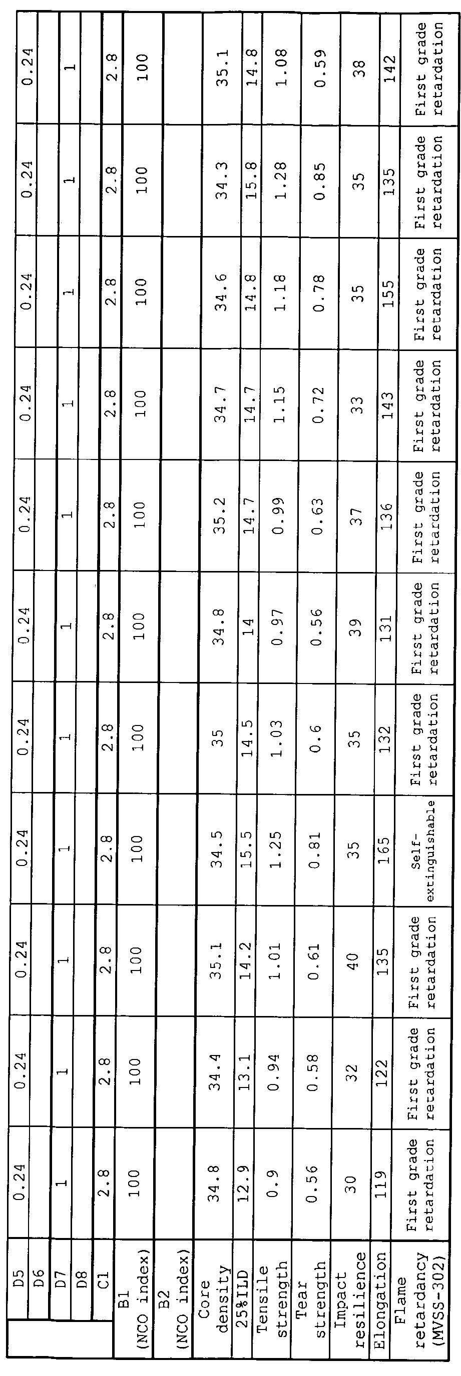

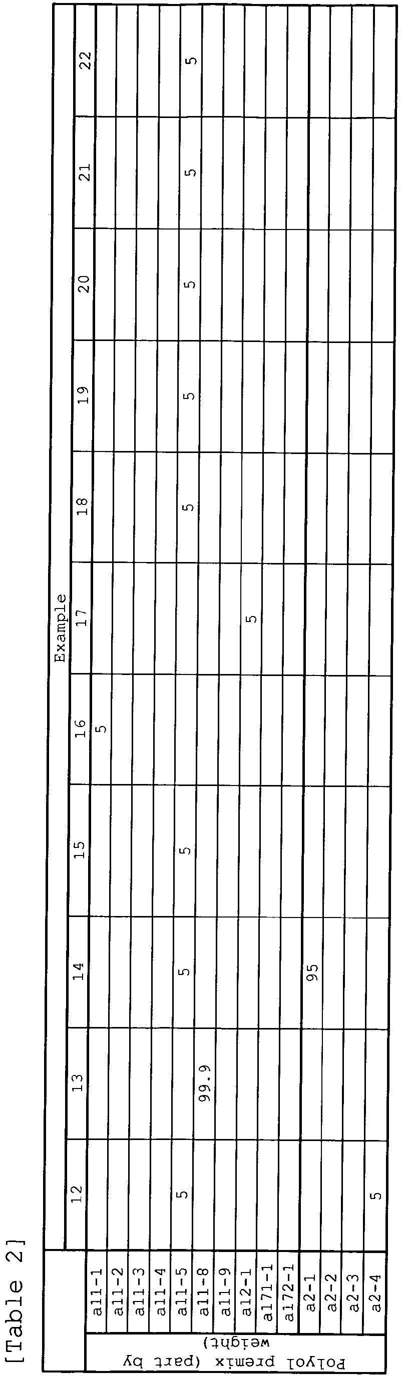

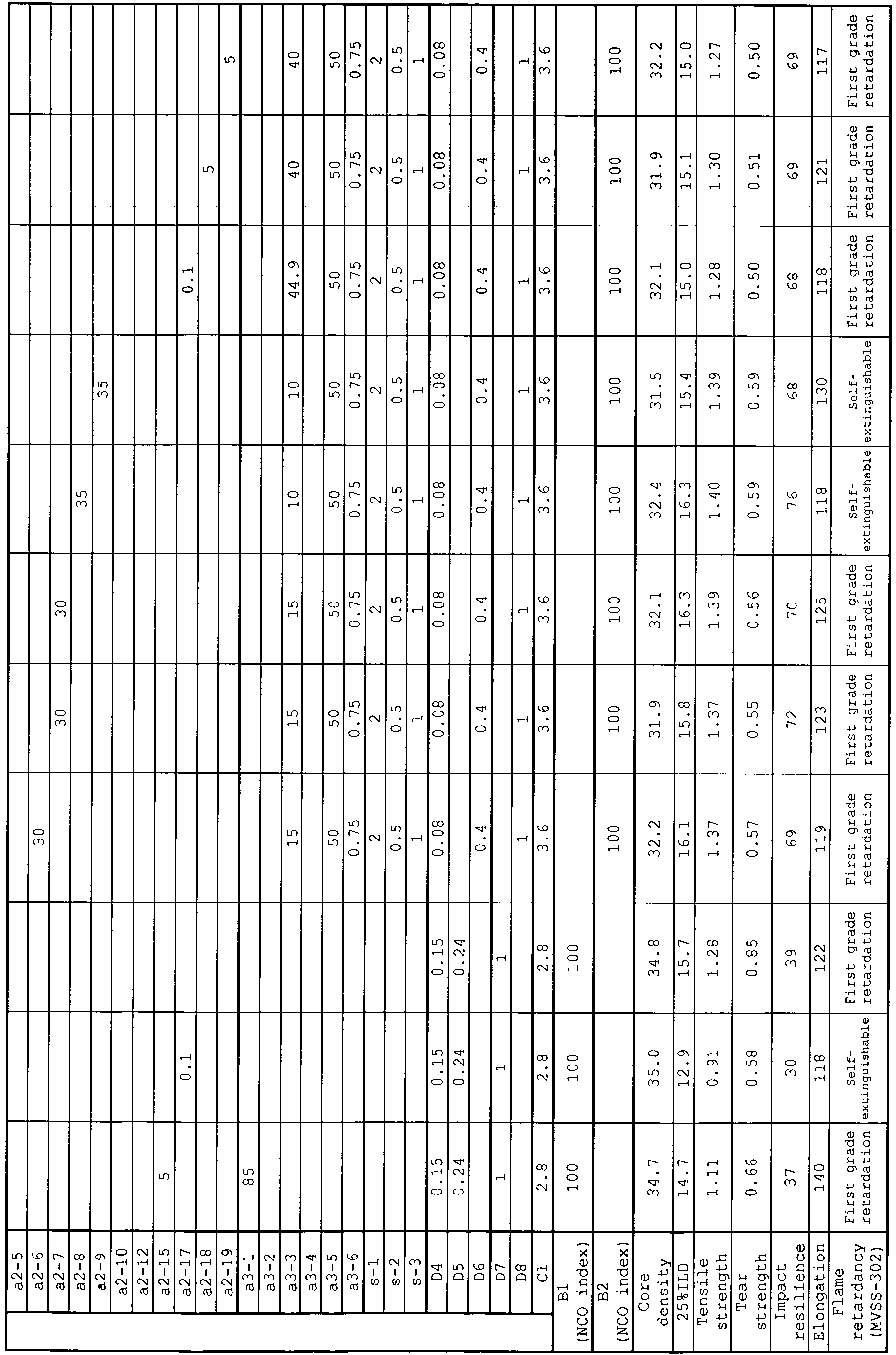

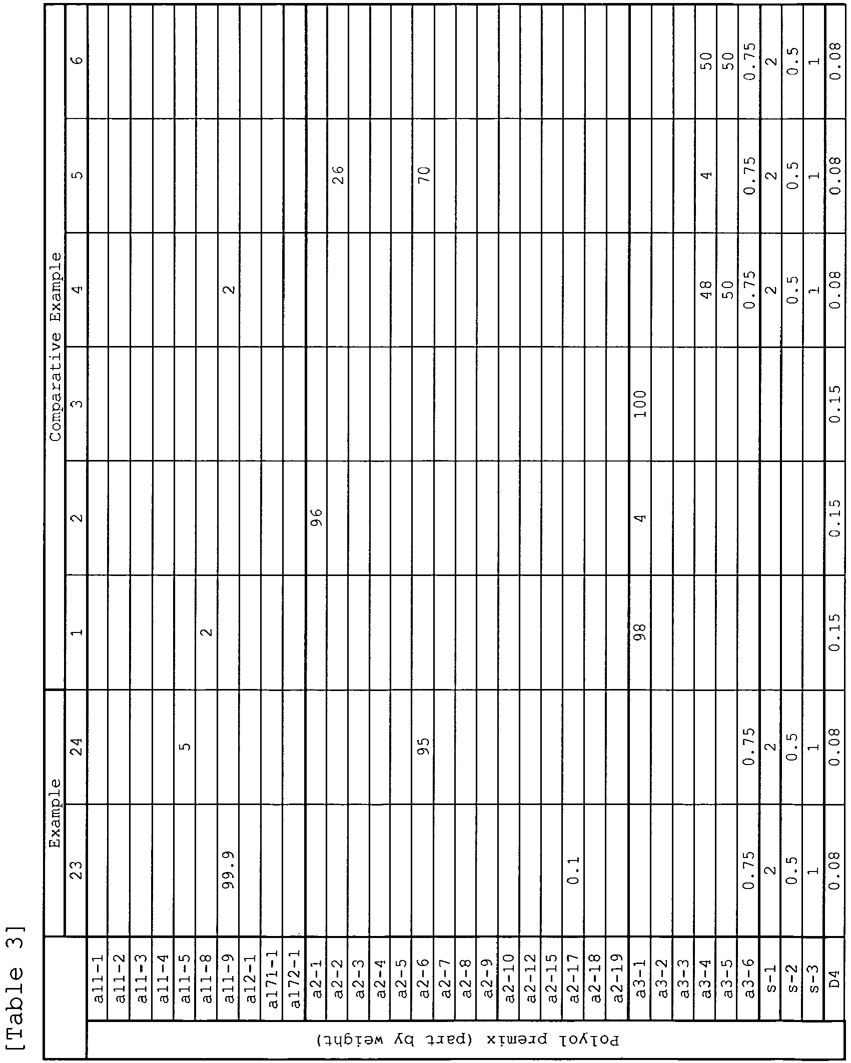

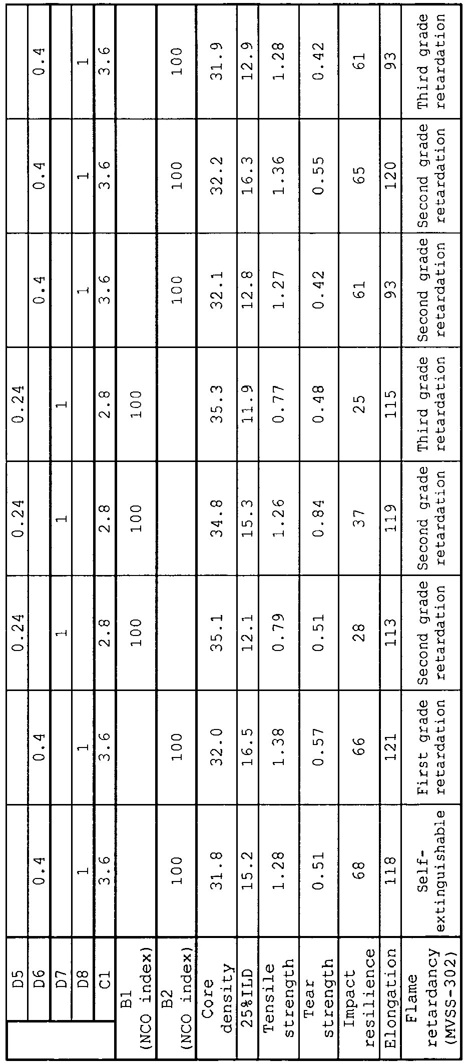

The methods for measuring foam properties and the units of the properties are given below.
Core density: in accordance with JIS K6400; the unit is kg/m³.
Hardness (25%-ILD): in accordance with JIS K6400; the unit is N/314 cm².
Tensile strength: in accordance with JIS K6400; the unit is kgf/cm².
Tear strength: in accordance with JIS K6400; in kgf/cm.
Impact resilience: in accordance with JIS K6400; the unit is %
Elongation ratio: in accordance with JIS K6400; the unit is %.
Flammability test (flame retardancy): in accordance with MVSS-302.

In Tables 1 to 3, the urethane foams of Examples 1 to 24 of the present invention are improved in ease of handling at the time of molding, foam physical properties, and flame retardancy than the urethane foams of Comparative Examples 1 to 6.

### [Examples 25 to 48, Comparative Examples 7 to 9]

The process of producing of the foamed polyurethane resins of Examples 25 to 48 and Comparative Examples 7 to 9 is as follows.

First, prescribed amounts of a polyol composition {(a1) to (a3) } controlled to 25±5°C, a foaming agent (C), and an additive (D), such as a foam stabilizer and a urethanization catalyst, in the number of parts by weight given in Tables 4 to 6 are mixed, thereby preparing a polyol premix. An organic polyisocyanate (B) controlled to 25±5°C was added in a prescribed number of parts by weight to the polyol premix and rapidly mixed at 8000 rpm x 6 seconds with a stirrer [HOMO DISPER: manufactured by Tokusyu Kika Kogyo Co., Ltd.], and then the resulting mixed liquid was immediately poured into a lidless aluminum box of 25°C sized 240 x 240 x 240 mm and allowed to foam freely, affording a foaming polyurethane resin.

The measured results of the core density, the compressive hardness, and the flammability (combustion distance, time until combustion penetration) of the foaming polyurethane resins obtained by the Examples and the Comparative Examples are shown in Tables 4 to 6.

### <Method of measuring core density>

After molding by the method described above, four samples of 50 (length) x 50 (width) x 50 (height) mm were taken from the center of the molded article aged for one day at a temperature of 25°C and a humidity of 60%. Each of the samples was measured in accordance with the method of testing a core density provided in JIS A 9511 (1995).

### <Method of measuring compressive hardness>

Each of the samples whose core density was measured was measured in accordance with the method of testing compressive hardness provided in JIS A 9511 (1995).

### <Method of measuring flammability (combustion distance)>

Five samples of 150 (length) x 50 (width) x 13 (height) mm were taken from the center of a molded article and then the flammability thereof was measured in accordance with the method of testing flammability provided in JIS A 9511 (1995).

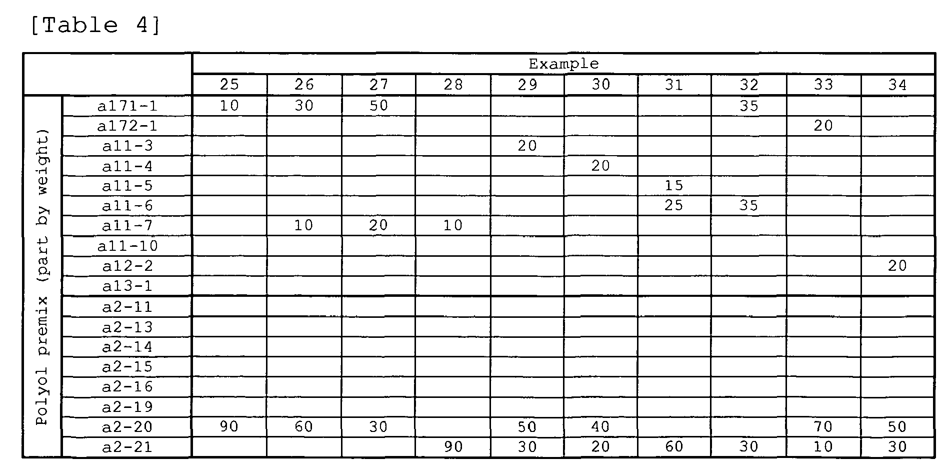

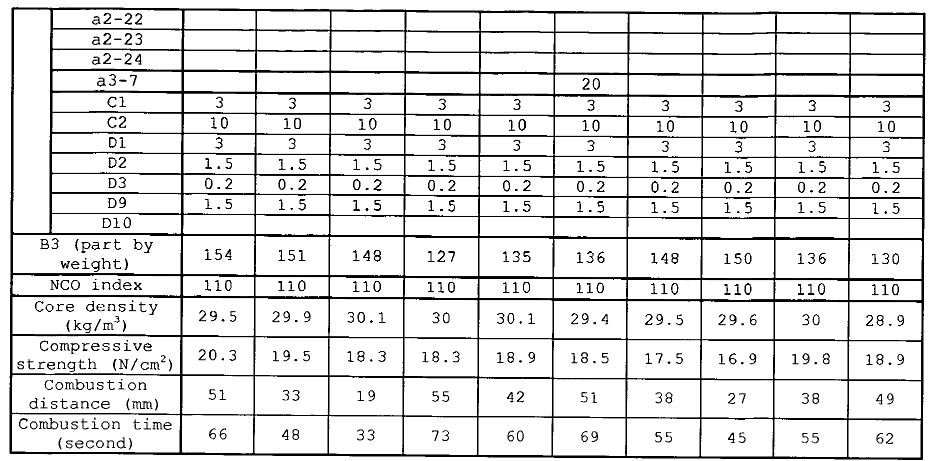

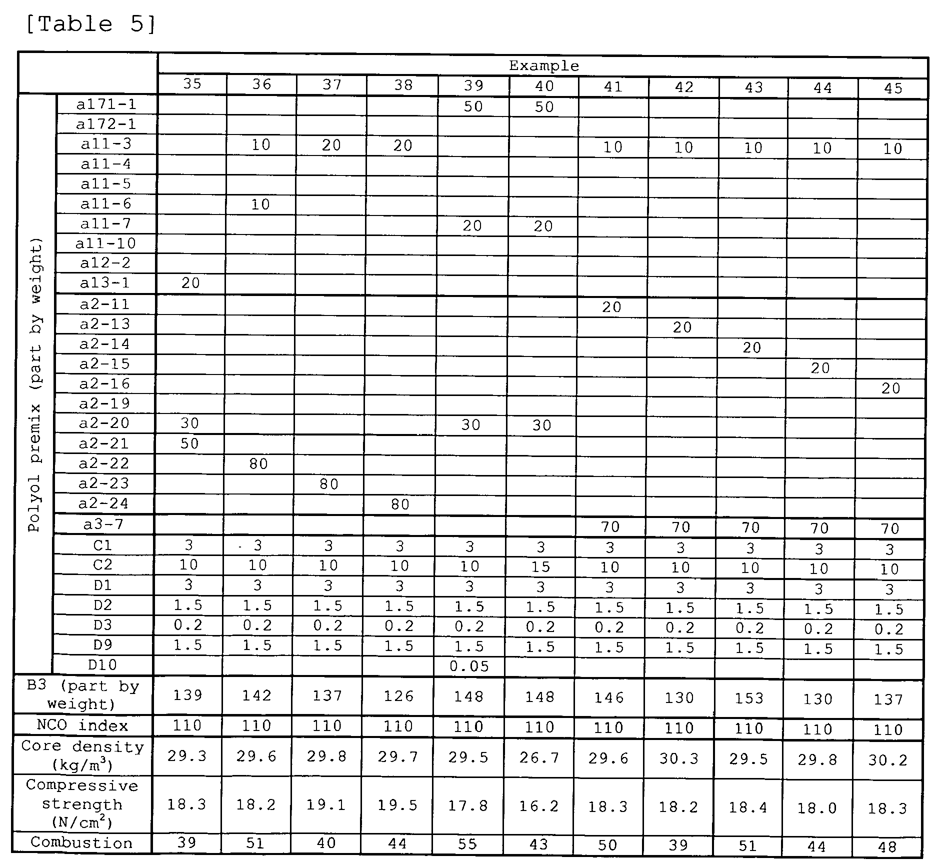

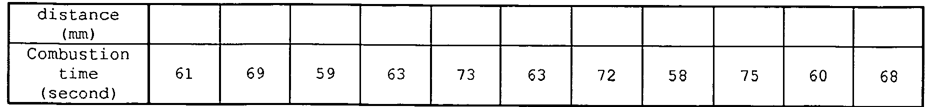

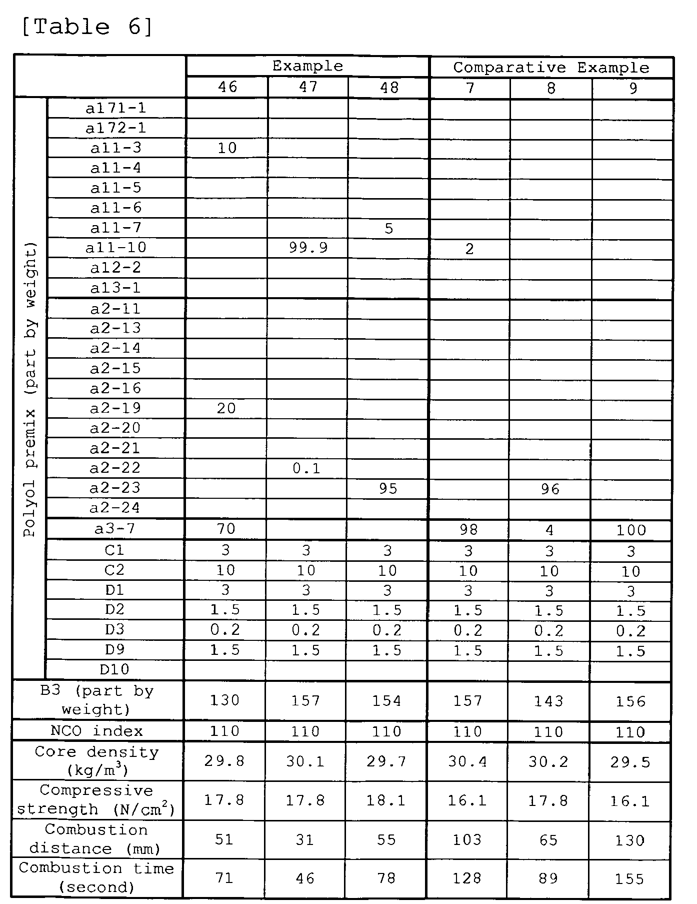

As shown in Tables 4 to 6, the polyurethane resin of the present invention is a resin that is superior in combustion resistance and also exhibits superior compressive hardness and combustion resistance (flame retardancy) comparable with those of existing resins even if it is made low in density.

### INDUSTRIAL APPLICABILITY

Polyurethane resins obtained by using the polyol compositions for the production of polyurethane resins of the present invention can be used suitably for any applications of polyurethane resins. Especially, polyurethane foams can be used suitably for any applications of polyurethane foams, such as vehicle seats, furniture, construction materials, bedding, apparel, electric equipment, electronic equipment, packages, and other applications (sanitary tools, cosmetic tools).

## Claims

1. A polyol composition (A) for the production of polyurethane resin, the polyol composition comprising a compound (a1) having a vinyl polymerizable functional group represented by the following formula (I) and a strength improver (a2) represented by the following formula (II), 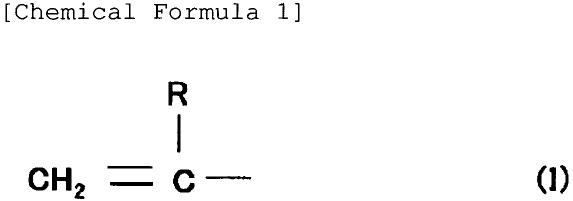 wherein in formula (I), R represents hydrogen, an alkyl group having 1 to 15 carbon atoms, or an aryl group having 6 to 21 carbon atoms, 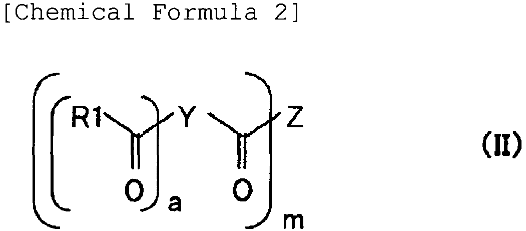 wherein in formula (II), R1 represents a residue resulting from the removal of one active hydrogen atom from an active hydrogen-containing compound, and a plurality of R1s each may be the same or different; Y represents a residue resulting from the removal of a carboxyl group from a di-or more-valent aromatic polycarboxylic acid (f), wherein the aromatic ring of Y is composed of carbon atoms, and at least one of the substituents of the aromatic ring is a hydrogen atom though the substituents each may be a hydrogen atom or another substituent; a is an integer satisfying 1 ≤ a ≤ (the number of aromatic ring substituents - 1); Z represents a residue resulting from the removal of m active hydrogen atoms from an m- or more-valent active hydrogen-containing compound; and m represents an integer of 1 to 10.

2. The polyol composition for the production of polyurethane resin according to claim 1, wherein the strength improver (a2) satisfies the following (1) and (2),
(1) the aromatic ring concentration (mmol/g) is 0.1 to 10, and
(2) the hydroxyl value (mgKOH/g) is 0 to 700.

3. The polyol composition for the production of polyurethane resin according to claim 1 or 2, wherein the aromatic polycarboxylic acid (f) is a tri- or more-valent aromatic polycarboxylic acid, and the arrangement of the substituents on Y in formula (II) is a structure in which two carbonyl groups are located next to each other and hydrogen is located as a substituent between a third carbonyl group and a first or second carbonyl group.

4. The polyol composition for the production of polyurethane resin according to any one of claims 1 to 3, wherein the vinyl polymerizable functional group concentration (mmol/g) of the compound (a1) is 1.0 to 10.4.

5. The polyol composition for the production of polyurethane resin according to any one of claims 1 to 4, wherein the compound (a1) has an active hydrogen-containing group and a vinyl polymerizable functional group, and comprises at least one active hydrogen compound selected from the group consisting of the following (a11) through (a16), wherein the active hydrogen compound has an active hydrogen value of 10 to 1200 and a vinyl polymerizable functional group concentration (mmol/g) of 1.0 to 10.1,
(a11): a partial ester of a polyol with an unsaturated carboxylic acid
(a12): a partial ether of a polyol with an unsaturated alkyl
(a13): a partial amidation product of an amine with an unsaturated carboxylic acid
(a14): a partial alkylation product of an amine with an unsaturated alkyl
(a15): a partial thioester of a polythiol with an unsaturated carboxylic acid
(a16): a partial thioether of a polythiol with an unsaturated alkyl.

6. The polyol composition for the production of polyurethane resin according to any one of claims 1 to 5, wherein the compound (a1) comprises a compound (a17) having a vinyl polymerizable functional group and having no active hydrogen-containing group.

7. The polyol composition for the production of polyurethane resin according to any one of claims 1 to 6, wherein the content of the compound (a1) having a vinyl polymerizable functional group is 5 to 99.9% by weight based on the weight of the polyol composition (A).

8. The polyol composition for the production of polyurethane resin according to any one of claims 1 to 7, wherein the content of the strength improver (a2) is 0.1 to 95% by weight based on the weight of the polyol composition (A).

9. The polyol composition for the production of polyurethane resin according to any one of claims 1 to 8, wherein the polyol composition further comprises a polyol (a3) other than (a1) and (a2).

10. The polyol composition for the production of polyurethane resin according to claim 9, wherein the polyol (a3) is a polyether polyol having a hydroxyl value mgKOH/g of 20 to 1900.

11. The polyol composition for the production of polyurethane resin according to claim 9 or 10, wherein the content of the compound (a1) having a vinyl polymerizable functional group is 5 to 60% by weight, the content of the strength improver (a2) is 5 to 80% by weight, and the content of the polyol (a3) is 10 to 90% by weight based on the weight of the polyol composition (A).

12. The polyol composition for the production of polyurethane resin according to any one of claims 1 to 11, wherein the form of the polyurethane resin is polyurethane foam.

13. A process for producing a polyurethane resin, the process comprising reacting the polyol composition (A) for the production of polyurethane resin according to any one of claims 1 to 12 with an organic polyisocyanate (B).

14. The process for producing a polyurethane resin according to claim 13, the process comprising reacting the polyol composition (A) for the production of polyurethane resin with the organic polyisocyanate (B) in the presence of a foaming agent, a urethanization catalyst, and a foam stabilizer.

15. The process for producing a polyurethane resin according to claim 13 or 14, wherein the organic polyisocyanate (B) comprises at least one organic polyisocyanate (b) selected from the group consisting of 2,4'- and 4,4'-diphenylmethane diisocyanates, polymethylene polyphenylene polyisocyanate, and modified products thereof.

16. The process for producing a polyurethane resin according to claim 15, wherein the content of the organic polyisocyanate (b) is 40 to 100% by weight based on the weight of the organic polyisocyanate (B).

17. The process for producing a polyurethane resin according to any one of claims 13 to 16, wherein polymerization of vinyl polymerizable functional groups and a polyurethane formation reaction are conducted under a condition where crosslinking occurs between a vinyl polymerized chain moiety and a polyurethane chain moiety formed as a result of the reactions.

18. The process for producing a polyurethane resin according to any one of claims 13 to 17, wherein the form of the polyurethane resin is polyurethane foam.

## Patentansprüche

1. Polyolzusammensetzung (A) zur Herstellung von Polyurethanharz, wobei die Polyolzusammensetzung eine Verbindung (a1), welche eine polymerisierbare funktionelle Vinylgruppe gemäß folgender Formel (I) aufweist, und einen Festigkeitsverbesserer (a2) gemäß folgender Formel (II) umfasst, 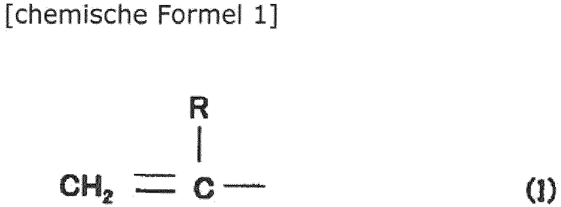 wobei in Formel (I) R Wasserstoff, eine Allylgruppe mit 1 bis 15 Kohlenstoffatomen oder eine Arylgruppe mit 6 bis 21 Kohlenstoffatomen darstellt, 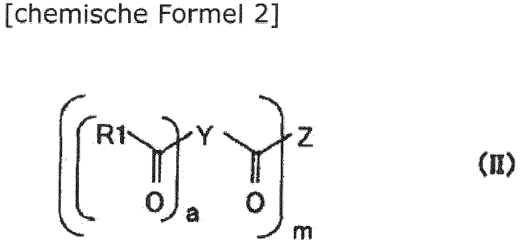 wobei in Formel (II) R1 einen Rest darstellt, der aus dem Entfernen eines aktiven Wasserstoffatoms von einer aktiven Wasserstoff enthaltenden Verbindung resultiert, und mehrere R1-Reste jeweils gleich oder verschieden sein können; Y einen Rest darstellt, der aus dem Entfernen einer Carboxylgruppe von einer zwei- oder höherwertigen aromatischen Polycarbonsäure (f) resultiert, wobei der aromatische Ring von Y aus Kohlenstoffatomen besteht und wenigstens einer der Substituenten des aromatischen Rings ein Wasserstoffatom ist, jedoch die Substituenten jeweils ein Wasserstoffatom oder ein anderer Substituent sein können; a eine ganze Zahl ist, für die gilt: 1 ≤ a ≤ (Anzahl der Substituenten des aromatischen Rings - 1); Z einen Rest darstellt, der aus dem Entfernen von m aktiven Wasserstoffatomen von einer m- oder höherwertigen aktiven Wasserstoff enthaltenden Verbindung resultiert; und m eine ganze Zahl von 1 bis 10 darstellt.

2. Polyolzusammensetzung zur Herstellung von Polyurethanharz gemäß Anspruch 1, wobei der Festigkeitsverbesserer (a2) die folgenden Bedingungen (1) und (2) erfüllt:
(1) die Konzentration des aromatischen Rings (mmol/g) beträgt 0,1 bis 10, und
(2) die Hydroxylzahl (mgKOH/g) beträgt 0 bis 700.

3. Polyolzusammensetzung zur Herstellung von Polyurethanharz gemäß Anspruch 1 oder 2, wobei die aromatische Polycarbonsäure (f) eine drei- oder höherwertige aromatische Polycarbonsäure ist, und die Anordnung der Substituenten auf Y in Formel (II) eine Struktur ist, in der zwei Carbonylgruppen nebeneinander angeordnet sind, und Wasserstoff als Substituent zwischen einer dritten Carbonylgruppe und einer ersten oder zweiten Carbonylgruppe angeordnet ist.

4. Polyolzusammensetzung zur Herstellung von Polyurethanharz gemäß irgendeinem der Ansprüche 1 bis 3, wobei die Konzentration der polymerisierbaren funktionellen Vinylgruppe (mmol/g) der Verbindung (a1) 1,0 bis 10,4 beträgt.

5. Polyolzusammensetzung zur Herstellung von Polyurethanharz gemäß irgendeinem der Ansprüche 1 bis 4, wobei die Verbindung (a1) eine aktiven Wasserstoff enthaltende Gruppe und eine polymerisierbare funktionelle Vinylgruppe aufweist, und wenigstens eine Verbindung mit aktivem Wasserstoff umfasst, die ausgewählt ist aus der Gruppe bestehend aus den im folgenden aufgeführten Verbindungen (a11) bis (a16), wobei die Verbindung mit aktivem Wasserstoff eine aktive Wasserstoffzahl von 10 bis 1200 und eine Konzentration der polymerisierbaren funktionellen Vinylgruppe (mmol/g) von 1,0 bis 10,1 aufweist,
(a11): ein Partialester eines Polyols mit einer ungesättigten Carbonsäure
(a12): ein Partialether eines Polyols mit einem ungesättigten Alkyl
(a13): ein Produkt einer partiellen Amidierung eines Amins mit einer ungesättigten Carbonsäure
(a14): ein Produkt einer partiellen Alkylierung eines Amins mit einem ungesättigten Alkyl
(a15): ein Partialthioester eines Polythiols mit einer ungesättigten Carbonsäure
(a16): ein Partialthioether eines Polythiols mit einem ungesättigten Alkyl.

6. Polyolzusammensetzung zur Herstellung von Polyurethanharz gemäß irgendeinem der Ansprüche 1 bis 5, wobei die Verbindung (a1) eine Verbindung (a17) umfasst, welche eine polymerisierbare funktionelle Vinylgruppe aufweist und keine aktiven Wasserstoff enthaltende Gruppe aufweist.

7. Polyolzusammensetzung zur Herstellung von Polyurethanharz gemäß irgendeinem der Ansprüche 1 bis 6, wobei der Gehalt der Verbindung (a1), welche eine polymerisierbare funktionelle Vinylgruppe aufweist, 5 bis 99,9 Gew.-%, bezogen auf das Gewicht der Polyolzusammensetzung (A), beträgt.

8. Polyolzusammensetzung zur Herstellung von Polyurethanharz gemäß irgendeinem der Ansprüche 1 bis 7, wobei der Gehalt des Festigkeitsverbesserers (a2) 0,1 bis 95 Gew.-%, bezogen auf das Gewicht der Polyolzusammensetzung (A), beträgt.

9. Polyolzusammensetzung zur Herstellung von Polyurethanharz gemäß irgendeinem der Ansprüche 1 bis 8, wobei die Polyolzusammensetzung außerdem ein Polyol (a3) umfasst, das sich von (a1) und (a2) unterscheidet.

10. Polyolzusammensetzung zur Herstellung von Polyurethanharz gemäß Anspruch 9, wobei das Polyol (a3) ein Polyetherpolyol mit einer Hydroxylzahl (mgKOH/g) von 20 bis 1900 ist.

11. Polyolzusammensetzung zur Herstellung von Polyurethanharz gemäß Anspruch 9 oder 10, wobei der Gehalt der Verbindung (a1), welche eine polymerisierbare funktionelle Vinylgruppe aufweist, 5 bis 60 Gew.-% beträgt, der Gehalt des Festigkeitsverbesserers (a2) 5 bis 80 Gew.-% beträgt, und der Gehalt des Polyols (a3) 10 bis 90 Gew.-% beträgt, jeweils bezogen auf das Gewicht der Polyolzusammensetzung (A).

12. Polyolzusammensetzung zur Herstellung von Polyurethanharz gemäß irgendeinem der Ansprüche 1 bis 11, wobei die Form des Polyurethanharzes Polyurethanschaum ist.

13. Verfahren zur Herstellung von Polyurethanharz, wobei das Verfahren das Umsetzen der Polyolzusammensetzung (A) zur Herstellung von Polyurethanharz gemäß irgendeinem der Ansprüche 1 bis 12 mit einem organischen Polyisocyanat (B) umfasst.

14. Verfahren zur Herstellung von Polyurethanharz gemäß Anspruch 13, wobei das Verfahren das Umsetzen der Polyolzusammensetzung (A) zur Herstellung von Polyurethanharz mit dem organischen Polyisocyanat (B) in Gegenwart eines Schäummittels, eines Urethanisierungskatalysators und eines Schaumstabilisators umfasst.

15. Verfahren zur Herstellung von Polyurethanharz gemäß Anspruch 13 oder 14, wobei das organische Polyisocyanat (B) wenigstens ein organisches Polyisocyanat (b) umfasst, das ausgewählt ist aus der Gruppe bestehend aus 2,4'- und 4,4'-Diphenylmethandiisocyanaten, Polymethylenpolyphenylenpolyisocyanat und modifizierten Produkten davon.

16. Verfahren zur Herstellung von Polyurethanharz gemäß Anspruch 15, wobei der Gehalt des organischen Polyisocyanats (b) 40 bis 100 Gew.-%, bezogen auf das Gewicht des organischen Polyisocyanats (B), beträgt.

17. Verfahren zur Herstellung von Polyurethanharz gemäß irgendeinem der Ansprüche 13 bis 16, wobei die Polymerisation der polymerisierbaren funktionellen Vinylgruppen und die Polyurethanbildungsreaktion unter Bedingungen durchgeführt werden, unter denen Vernetzung zwischen dem polymerisierten Vinylkettenanteil und dem Polyurethankettenanteil, die als Produkt der Reaktionen gebildet werden, stattfindet.

18. Verfahren zur Herstellung von Polyurethanharz gemäß irgendeinem der Ansprüche 13 bis 17, wobei die Form des Polyurethanharzes Polyurethanschaum ist.

## Revendications

1. Composition de polyol (A) pour la production de résine polyuréthane, la composition de polyol comprenant un composé (a1) ayant un groupe fonctionnel vinyle polymérisable représenté par la formule (I) suivante et un agent de renforcement de la résistance (a2) représenté par la formule (II) suivante, 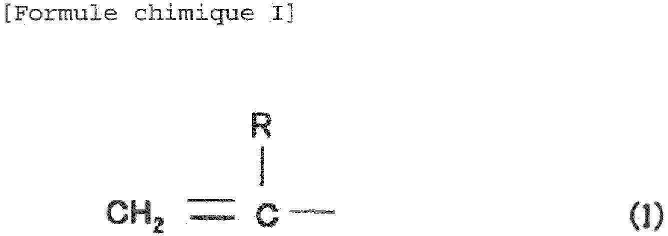 dans laquelle dans la formule (I), R représente un atome d'hydrogène, un groupe alkyle ayant 1 à 15 atomes de carbone, ou un groupe aryle ayant 6 à 21 atomes de carbone, 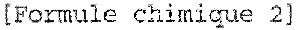 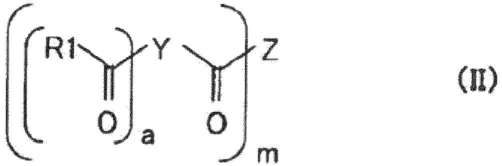 dans laquelle dans la formule (II), R1 représente un résidu résultant du retrait d'un atome d'hydrogène actif d'un composé contenant un hydrogène actif, et une pluralité de R1, chacun pouvant être identique ou différent ; Y représente un résidu résultant du retrait d'un groupe carboxyle d'un acide polycarboxylique aromatique divalent ou plurivalent (f), dans laquelle le cycle aromatique de Y est composé d'atomes de carbone, et au moins l'un des substituants du cycle aromatique est un atome d'hydrogène bien que les substituants puissent être respectivement un atome d'hydrogène ou un autre substituant ; a est un nombre entier satisfaisant à 1 ≤ a ≤ (le nombre de substituants du cycle aromatique - 1) ; Z représente un résidu résultant du retrait de m atomes d'hydrogène actif d'un composé contenant un hydrogène actif à valence m ou plurivalent ; et m représente un nombre entier de 1 à 10.

2. Composition de polyol pour la production d'une résine de polyuréthane selon la revendication 1, dans laquelle l'agent de renforcement de la résistance (a2) satisfait aux points (1) et (2) suivants,
(1) la concentration du cycle aromatique (mmoles/g) est de 0,1 à 10, et
(2) l'indice d'hydroxyle (mgKOH/g) est de 0 à 700.

3. Composition de polyol pour la production d'une résine de polyuréthane selon la revendication 1 ou 2, dans laquelle l'acide polycarboxylique aromatique (f) est un acide polycarboxylique aromatique trivalent ou plurivalent, et l'agencement des substituants Y dans la formule (II) est une structure dans laquelle deux groupes carbonyle sont situés à proximité l'un de l'autre et l'hydrogène est situé en tant que substituant entre un troisième groupe carbonyle et un premier ou un deuxième groupe carbonyle.

4. Composition de polyol pour la production d'une résine de polyuréthane selon l'une quelconque des revendications 1 à 3, dans laquelle la concentration du groupe fonctionnel vinyle polymérisable (mmoles/g) du composé (a1) est de 1,0 à 10,4.

5. Composition de polyol pour la production d'une résine de polyuréthane selon l'une quelconque des revendications 1 à 4, dans laquelle le composé (a1) a un groupe contenant un hydrogène actif et un groupe fonctionnel vinyle polymérisable, et comprend au moins un composé hydrogène actif choisi dans le groupe constitué des (a11) à (a16) suivants, dans laquelle le composé hydrogène actif a un indice d'hydrogène actif de 10 à 1200 et une concentration de groupe fonctionnel vinyle polymérisable (mmoles/g) de 1,0 à 10,1,
(a11) : un ester partiel d'un polyol avec un acide carboxylique insaturé
(a12) : un éther partiel d'un polyol avec un alkyle insaturé
(a13) : un produit d'amidation partiel d'une amine avec un acide carboxylique insaturé
(a14) un produit d'alkylation partiel d'une amine avec un alkyle insaturé
(a15) : un thioester partiel d'un polythiol avec un acide carboxylique insaturé
(a16) : un thioéther partiel d'un polythiol avec un alkyle insaturé.

6. Composition de polyol pour la production d'une résine de polyuréthane selon l'une quelconque des revendications 1 à 5, dans laquelle le composé (a1) comprend un composé (a17) ayant un groupe fonctionnel vinyle polymérisable et n'ayant pas de groupe contenant un hydrogène actif.

7. Composition de polyol pour la production d'une résine de polyuréthane selon l'une quelconque des revendications 1 à 6, dans laquelle la teneur du composé (a1) ayant un groupe fonctionnel vinyle polymérisable est de 5 à 99,9 % en poids sur la base du poids de la composition de polyol (A).

8. Composition de polyol pour la production d'une résine de polyuréthane selon l'une quelconque des revendications 1 à 7, dans laquelle la teneur de l'agent de renforcement de la résistance (a2) est de 0,1 à 95 % en poids sur la base du poids de la composition de polyol (A).

9. Composition de polyol pour la production d'une résine de polyuréthane selon l'une quelconque des revendications 1 à 8, la composition de polyol comprenant en outre un polyol (a3) autre que (a1) et (a2).

10. Composition de polyol pour la production d'une résine de polyuréthane selon la revendication 9, dans laquelle le polyol (a3) est un polyol polyéther ayant un indice hydroxyle mgKOH/g de 20 à 1900.

11. Composition de polyol pour la production d'une résine de polyuréthane selon la revendication 9 ou 10, dans laquelle la teneur du composé (a1) ayant un groupe fonctionnel vinyle polymérisable est de 5 à 60 % en poids, la teneur de l'agent de renforcement de la résistance (a2) est de 5 à 80 % en poids, et la teneur du polyol (a3) est de 10 à 90 % en poids sur la base du poids de la composition de polyol (A).

12. Composition de polyol pour la production d'une résine de polyuréthane selon l'une quelconque des revendications 1 à 11, dans laquelle la forme de résine de polyuréthane est une mousse de polyuréthane.

13. Procédé de production d'une résine de polyuréthane, le procédé comprenant la réaction de la composition de polyol (A) pour la production d'une résine de polyuréthane selon l'une quelconque des revendications 1 à 12 avec un polyisocyanate organique (B).

14. Procédé de production d'une résine de polyuréthane selon la revendication 13, le procédé comprenant la réaction de la composition de polyol (A) pour la production d'une résine de polyuréthane avec le polyisocyanate organique (B) en présence d'un agent moussant, d'un catalyseur d'uréthanisation et d'un stabilisant de mousse.

15. Procédé de production d'une résine de polyuréthane selon la revendication 13 ou 14, dans lequel le polyisocyanate organique (B) comprend au moins un polyisocyanate organique (b) choisi dans le groupe constitué des 2,4'- et 4,4'-diphénylméthane diisocyanates, du polyméthylène polyphénylène polyisocyanate, et des produits modifiés de ceux-ci.

16. Procédé de production d'une résine de polyuréthane selon la revendication 15, dans lequel la teneur du polyisocyanate organique (b) est de 40 à 100 % en poids sur la base du poids du polyisocyanate organique (B).

17. Procédé de production d'une résine de polyuréthane selon l'une quelconque des revendications 13 à 16, dans lequel la polymérisation des groupes fonctionnels vinyle polymérisables et la réaction de formation de polyuréthane sont réalisées dans des conditions dans lesquelles une réticulation se produit entre une fraction de chaîne vinyle polymérisée et une fraction de chaîne polyuréthane formée en conséquence des réactions.

18. Procédé de production d'une résine de polyuréthane selon l'une quelconque des revendications 13 à 17, dans lequel la forme de la résine polyuréthane est une mousse de polyuréthane.
